# EUROPÄISCHE PATENTSCHRIFT

(11) **EP 1 204 823 B1**
(45) Veröffentlichungstag und Bekanntmachung des Hinweises auf die Patenterteilung: **22.09.2004**
(21) Anmeldenummer: 00948016.1
(22) Anmeldetag: 31.07.2000
(51) Int. Cl.: F15B 11/028, G05D 16/20

(54) **ELEKTROHYDRAULISCHE ÜBERWACHUNGSEINRICHTUNG FÜR EINEN DOPPELT WIRKENDEN HYDROZYLINDER**
ELECTROHYDRAULIC MONITORING DEVICE FOR A DUAL EFFECT HYDRAULIC CYLINDER
DISPOSITIF DE SURVEILLANCE ELECTROHYDRAULIQUE D'UN CYLINDRE HYDRAULIQUE A DOUBLE EFFET

(30) Priorität: 16.08.1999 DE 19938132
(43) Veröffentlichungstag der Anmeldung: 15.05.2002
(73) Patentinhaber: HARTMANN & LÄMMLE GMBH & CO. KG, 71277 Rutesheim (DE)
(72) Erfinder: SCHULZE, Eckehart, 71287 Weissach (DE)
(74) Vertreter: Lutz, Johannes Dieter, Dr.
(86) Internationale Anmeldenummer: PCT/EP2000/007368
(87) Internationale Veröffentlichungsnummer: WO 2001/012995

(56) Entgegenhaltungen:
- EP-A- 0 697 525
- DE-A- 3 313 381
- DE-A- 4 446 538
- DE-B- 2 310 193
- DE-U- 29 808 294

## Beschreibung

Die Erfindung betrifft eine elektrohydraulische Überwachungseinrichtung für einen doppelt wirkenden Hydrozylinder.

Die Erfindung betrifft eine elektrohydraulische Überwachungseinrichtung für einen doppelt wirkenden Hydrozylinder, der durch alternative Druckbeaufschlagung und -entlastung zweier durch den Zylinderkolben gegeneinander abgegrenzter Druckräume in zwei, alternativen Auslenkungskonfigurationen seines Kolbens und des Zylindergehäuses entsprechenden unterschiedlichen Funktionen benutzbar ist, in denen, z.B. aus Sicherheitsgründen, die Aufrechterhaltung definierter Betriebsdrücke erforderlich ist, und mit den weiteren, im Oberbegriff des Patentanspruchs 1 genannten, gattungsbestimmenden Merkmalen. Eine Überwachungseinrichtung dieser Art ist durch die DE-PS 23 10 193 bekannt.

Die bekannte Überwachungseinrichtung ist in einer mit einem Druckminderventil, das zur Einstellung des Betriebsdruckes vorgesehen ist, integrierten Bauweise realisiert, derart, daß Funktionselemente des Druckminderventils auch als Funktionselemente der Überwachungseinrichtung ausgenutzt sind. Das Druckminderventil ist von einem mittleren Abschnitt einer zentral durchgehenden Bohrung eines langgestreckten blockförmigen Gehäuses aufgenommen. Das Druckminderventil umfaßt ein der Grundform nach zylindrischtopfförmiges, gegen die Gehäusebohrung laminar abgedichtetes Gehäuseteil, in dem, laminar gegen das Gehäuseteil abgedichtet ein Ventilkolben druckdicht verschiebbar geführt ist, der mit einem radialen Flansch an der freien Ringstimfläche des Zylindermantels des topfförmigen Gehäuseteils abstützbar ist. An der dem Ventilgehäuse abgewandten Seite dieses Kolbenflansches greift eine Druck-Wendelfeder an, während ihr dem Druckminderventil abgewandtes Ende an einem in der Gehäusebohrung druckdicht verschiebbar angeordneten Kolben abgestützt ist, dessen Position innerhalb der Gehäusebohrung zur Einstellung einer definierten Vorspannung dieser Ventilfeder mittels eines Spindeltriebes definiert veränderbar ist, dessen Spindelmutter an dem einen, vom Ventil entfernten Ende des Gehäuseblocks den Abschluß der zentralen Bohrung bildet. An der der Ventilfeder abgewandten Seite des Druckminderventils ist die zentrale Bohrung durch den Bodenbereich eines gehäusefest in die Bohrung eingesetzten zylindrisch-topfförmigen Gehäuseabschlußteils abgeschlossen, wobei die dem beweglichen Gehäuse des Druckminderventils zugewandte Ringstimfläche des rohrförmigen Mantels des Gehäuseabschlußteils einen gehäusefesten Anschlag für das Ventilgehäuse bildet, durch den gleichsam als Grundstellung des Ventilgehäuses eine Endstellung desselben markiert ist, in die das Ventilgehäuse des Druckminderventils durch die Wirkung seiner Ventilfeder gedrängt wird. In dieser Grundstellung des Ventilgehäuses ragt ein durch eine zentrale Bohrung des Bodenteils des Gehäuseabschlußteils hindurchtretender und gegen diese mittels einer gehäusefesten Ringdichtung abgedichteter, stößelförmiger Fortsatz eines im Inneren des rohrförmigen Abschnitts des Gehäuseabschlußteils druckdicht verschiebbar angeordneten "inneren" Sensorkolbens soweit axial aus dem Gehäuseabschlußteil heraus, daß ein elektrischer Schalter zur Abgabe eines für diese Position des Gehäuses des Druckminderventils charakteristisches elektrisches Ausgangssignal abgibt. Dieser Sensorkolben ist über einen ventilgehäuseseitigen axialen kurzen stößelförmigen Fortsatz an dem Ventilgehäuse abgestützt. Zwischen dem die beiden stößelförmigen Fortsätze gegeneinander absetzenden - flanschförmigen - Sensorkolben und dem Boden des Gehäuseabschlußteils ist der stößelförmige, zur Schalterbetätigung vorgesehene Kolbenfortsatz von einem Ringkolben umschlossen, der radial innen durch eine weitere Ringdichtung gegen den stößelförmigen Fortsatz des flanschförmigen Kolbens und radial außen mittels eines Dichtflansches gegen die innere zylindrische Mantelfläche des Gehäuseabschlußteils abgedichtet ist, wobei dieser Dichtflansch zum einen die axiale - bewegliche - Begrenzung einer Sensorkammer bildet, die gehäusefest durch den Boden des Gehäuseabschlußteils begrenzt ist, und zum anderen die axiale Begrenzung einer zweiten Sensorkammer, die axial beweglich durch den flanschförmigen, unmittelbar am Ventilgehäuse abstützbaren Sensorkolben begrenzt ist. Der sich zwischen dem Boden des Ventilgehäuses und dem an diesem abstützbaren Sensorkolben erstreckende Gehäuse-Innenraum und der Aufnahmeraum für die Ventilfeder stehen über gehäusefeste Kanäle in kommunizierender Verbindung miteinander und stehen unter demselben Druck, unter dem auch die zentrale, zum Vorratsbehälter zurückführende Rückströmleitung des hydraulischen Systems steht, der zwar geringer ist als der in dem überwachten Hydrozylinder über das Druckminderventil einzukoppelnde Betriebsdruck, jedoch signifikanten Schwankungen um einige bar, z.B. 5 bar, unterworfen sein kann. Derartige Druckschwankungen können zwar durch eine gesonderte Leckölleitung unterdrückt werden, was jedoch mit zusätzlichem Aufwand verbunden ist. Die durch den Ringkolben gegeneinander druckdicht abgegrenzten Sensorkammem sind je einzeln an einen der Druckräume des doppelt wirkenden Hydrozylinders angeschlossen, die, je nach Betriebsmodus dieses Hydrozylinders alternativ mit dem Ausgangsdruck des Druckminderventils beaufschlagt sind, je nach der Schaltstellung eines Betriebsart-Auswahlventils. Die Ringflächen, auf denen die Sensorkolben mit dem im Hydrozylinder herrschenden Betriebsdruck beaufschlagbar sind, sind so bemessen, daß, sobald in einer der Sensorkammem ein Betriebsdruck einen definierten hohen Bruchteil von z.B. 80 % des durch Einstellung der Ventilfeder vorgegebenen Wertes erreicht, der am Ventilgehäuse abgestützte flanschförmige Sensorkolben eine auf das Ventilgehäuse_zu gerichtete Verschiebung erfährt, wodurch das Ventilgehäuse aus seiner Grundstellung-Anlageposition mit dem Gehäuseabschlußteil - axial ausgelenkt wird und unter mäßiger Steigerung der Vorspannung der Ventilfeder einen Auslenkungshub a bis in eine zweite durch einen inneren Anschlagring des Gehäuses markierte Position ausführt, die einer Regelstellung des Ventilkolbens entspricht, in welcher der in den Zylinder eingekoppelte Druck geringfügig höher ist als derjenige Druck, der der Ventilfedervorspannung entspricht, die im Einstellbetrieb des Druckminderventils eingestellt worden ist.

Unabhängig davon, in welchem Betriebsmodus der Hauptzylinder betrieben wird, d.h. in welchem seiner Antriebsdruckräume der Betriebsdruck aufgebaut werden muß, führt dessen Einkopplung in eine der beiden Sensorkammem stets dazu, daß das Ventilgehäuse in seine gegenüber der "drucklosen" Grundstellung um den Hub a ausgelenkte Endstellung gelangt. Dabei wird, je nachdem, in welche Sensorkammer der überwachte Druck eingekoppelt ist, entweder der ventilgehäusenahe Sensorkolben allein auf das Ventilgehäuse zu gedrängt und der andere gegen den Boden des Gehäuseabschlußteils, oder es werden beide Sensorkolben gemeinsam auf das Ventilgehäuse zu geschoben. In beiden Fällen hebt der stabförmige Stößelfortsatz des ventilseitigen Sensorkolbens von dem Betätigungsglied des Schalters ab, wobei dieser, nachdem das Ventilgehäuse etwa den Auslenkungshub a/2 ausgeführt hat, in seine Grundstellung zurückfällt, in der das Schalt-Ausgangssignal anzeigt, daß der Betriebsdruck im Hauptzylinder erreicht ist, d.h., die hydraulische Anlage ordnungsgemäß arbeitet. Wird der Betriebsdruck aufgrund einer Fehlfunktion nicht erreicht, so tritt dieses Signal auch nicht auf, und es bleibt eine Signalkombination anstehen, die z.B. verhindert, daß eine Maschine in Betrieb genommen werden kann, oder es wird, falls zunächst das Signal kommt und wieder abfällt, die Maschine abgeschaltet.

Die bekannte Überwachungseinrichtung ist aufgrund ihres insoweit geschilderten Aufbaues und ihrer Funktion mit zumindest den folgenden funktionellen Nachteilen behaftet:

Die Ringdichtung, mittels derer das stößelförmige Betätigungselement an seine Austrittsseite zum Schalter hin gegen das Gehäuseabschlußteil abgedichtet ist, muß gegen einen relativ hohen Druck dicht bleiben und daher unter einer Mindestvorspannung stehen. Dies hat zur Folge, daß sie eine relativ hohe Reibung entfaltet, die einem Druck von einigen bar äquivalent sein kann. Die Dichtung hat somit einen die Empfindlichkeit der Überwachung reduzierenden Einfluß. Der Reibungswiderstand dieser Dichtung muß überwunden werden, wenn beide Sensorkolben gemeinsam verschoben werden. Dies gilt, wenn der Druck nur in derjenigen Hauptzylinderdruckkammer überwacht werden muß, der in den bodenseitigen Sensordruckraum der Überwachungseinrichtung eingekoppelt wird.

Muß hingegen der Druck in demjenigen Druckraum des Hauptzylinders überwacht werden, der in diejenige Sensorkammer der Überwachungseinrichtung eingekoppelt wird, die durch die beiden Sensorkolben in axialer Richtung begrenzt ist, so wird der ventilgehäuseseitige Sensorkolben sowohl gegen die Reibung der äußeren Ringdichtung als auch gegen diejenige bewegt, die die Ringdichtung des ringförmigen Sensorkolbens entfaltet, d.h. der bewegliche Kolben muß gegen etwa den doppelten Betrag der Reibung ausgelenkt werden, mit der Folge, daß die Empfindlichkeit der Überwachungseinrichtung, definiert als das Verhältnis pₛₒₗₗ/pₐ des durch Einstellung der Ventilfeder-Vorspannung vorgegebenen Soll-Betriebsdruckes pₛₒₗₗ zu dem Druck pₐ, der mindestens erforderlich ist, um die Haftreibung der Ringdichtungen der Sensorkolben zu überwinden, auf etwa die Hälfte desjenigen Werts reduziert wird, die für den erstgenannten Fall gilt. Dies ist so lange unkritisch, als die überwachten Betriebsdrücke relativ hoch sind und die dem Reibungswiderstand äquivalenten Druckwerte dagegen klein sind. Sind die überwachten Drücke ihrerseits jedoch relativ niedrig, so erhöht sich die Wahrscheinlichkeit für Fehlschaltungen.

Es kommt hinzu, daß die bekannte Überwachungseinrichtung beim Ansprechen d.h., sobald der Auslenkungshub des Ventilgehäuses beginnt, zum Schwingen neigt, da eine axiale Verschiebung des Ventilgehäuses aus einer Regelstellung des Ventilkolbens heraus, die einem Gleichgewichtszustand entspricht, zu einer plötzlichen Vergrößerung des Strömungsquerschnitts des vom Hochdruck(P)-Versorgungsanschluß des Druckminderventils zu dessen Verbraucher(A)-Anschluß führenden "ventilinternen" Strömungspfades sowie gleichzeitig zu einer Verringerung des Strömungsquerschnitts des im Regelungsbetrieb den Verbraucher(A)-Anschluß "ventilintern" mit dem Rücklauf(T)-Anschluß des Ventils verbindenden Strömungspfades führt, woraus eine drastische Störung des Gleichgewichts resultiert, wobei sich solche Einschwingvorgänge erst wieder "beruhigen" - abklingen - nachdem das Ventil wieder in eine neue Regelstellung gelangt ist.

Aufgabe der Erfindung ist es daher, eine Überwachungseinrichtung der eingangs genannten Art dahingehend zu verbessern, daß sich, unbeschadet eines konstruktiv einfachen Aufbaues, eine signifikant erhöhte Empfindlichkeit der Überwachungseinrichtung ergibt und für beide Sensorkolben dieselbe Empfindlichkeit gewährleistet ist.

Diese Aufgabe wird erfindungsgemäß durch die kennzeichnenden Merkmale des Patentanspruchs 1 gelöst.

Die Empfindlichkeit der erfindungsgemäßen Überwachungseinrichtung ist im wesentlichen allein durch den Reibungswiderstand bestimmt, gegen den die Sensorkolben und die Betätigungselemente verschiebbar sind, der jedoch sehr gering gehalten werden kann, da die diesbezügliche Dichtung nur in der Lage sein muß, gegen einen relativ geringen Druck abzudichten, so daß nennenswerte Vorspannungen dieser Dichtung nicht erforderlich sind.

Die Empfindlichkeit der Überwachungseinrichtung ist für beide Betriebsarten des Hydrozylinders praktisch dieselbe, da beide Sensor-Ringkolben in laminarer Dichtung gegen das sie aufnehmende Gleitführungsrohr, einerseits, und die zentrale Bohrung des Gehäuseblocks, andererseits, von dem sie aufgenommen sind, abgedichtet werden können, die außer der dämpfenden Bewegungsreibung im eingeschwungenen Zustand praktisch keine Reibung verursacht.

Die Überwachungseinrichtung ist so gestaltet, daß sie in Kombination mit einem gleichsam konventionellen Druckminderventil verwendet werden kann, da dieses, abgesehen von einer zur Verdrehsicherung der Stellhülse in dem Feder-Aufnahmeraum, in dem sich die Ventilfeder mit ihrem kolbenfemen Ende an dem Federteller abstützt, keiner konstruktiven Abänderung bedarf, im Unterschied zu der bekannten Einrichtung, bei der das Ventilgehäuse beweglich angeordnet sein muß, damit es als Stellhülse für die Überwachungseinrichtung nutzbar ist.

Die gemäß Anspruch 2 vorgesehene Gestaltung der von dem schlanken nadelförmigen Betätigungselement durchsetzten Gehäusebohrung als Stufenbohrung mit einer zu dem den Ringflansch der Stellhülse aufnehmenden, mit dem Tank des Druckversorgungsaggregats über die Rückströmleitung in kommunizierender Verbindung stehenden Hohlraum hin offenen Dichtungsstufe, deren Durchmesser größer ist als der Durchmesser der in den ölfreien Schalter-Aufnahmeraum mündenden Führungsstufe dieser Bohrung, hat den Vorteil, daß, wie gemäß Anspruch 3 vorgesehen, von dieser Dichtungsstufe zwei Lippendichtungen "hintereinander" aufgenommen werden können, die eine aus Sicherheitsgründen erwünschte, besonders gute Abdichtung der genannten Räume gegeneinander, gleichsam doppelte Sicherheit der Abdichtung, vermitteln, die noch dadurch erhöht ist, daß zwischen den beiden Lippendichtungen, vorzugsweise im Bereich derjenigen, die dem mit Öl verfüllten Raum zugewandt ist, ein radialer Entlastungskanal vorgesehen ist, so daß, falls die ölraumseitige Dichtung beschädigt sein sollte, dies an einem Aussickern von Öl erkennbar ist, bevor die Gefahr besteht, daß Öl in den Schalter-Aufnahmeraum vorgedrungen sein kann.

Die gemäß Anspruch 5 realisierte Art der rotatorischen Kopplung der zur Einstellung der Federvorspannung vorgesehenen Gewindespindel mit einer drehbaren jedoch axial unverschiebbaren Stellwelle ist sowohl für ein manuelles Einstellen der Federspannung als auch für eine elektromotorische Einstellung derselben besonders zweckmäßig.

Durch die gemäß Anspruch 6 vorgesehene Gestaltung des Hülsenmantels der Gleitführungshülse der Gewindespindel wird im Ergebnis eine druckausgeglichene Anordnung der Stellhülse innerhalb der durchgehenden Bohrung des Gehäuseblocks der Überwachungseinrichtung erreicht, so daß sich Druckstöße, die in einer gemeinsamen Rücklaufleitung des hydraulischen Gesamtsystems und damit auch in mit dieser Leitung in kommunizierender Verbindung stehenden Ölräumen der Überwachungseinrichtung auftreten können, nicht auf die Position der Stellhülse der Überwachungseinrichtung auswirken können.

Die gemäß Anspruch 7 vorgesehene Auslegung des Flächenverhältnisses F_{S}/F_{R} der Steuerfläche F_{S} des Kolbens des Druckminderventils zu den Ringflächen F_{R} der Sensorkolben der Überwachungseinrichtung führt dann in einem weiten Variationsbereich der durch Einstellen der Federvorspannung vorgebbaren Betriebsdrücken zu einem zuverlässigen Ansprechen der Überwachungseinrichtung.

Hierfür ist unter dem Gesichtspunkt einer genauen Vorgabe der zu überwachenden Betriebsdrücke, insbesondere der Vorgabe relativ niedriger Betriebsdrücke auch die gemäß Anspruch 8 vorgesehene Art der Abstützung der Gewindespindel an einem die Ventilfeder axial stützenden Federteller über ein Wälzlager geeignet, für das durch die Merkmale des Anspruchs 9 eine bevorzugte Gestaltung angegeben ist.

Diese reibungsarme Gestaltung der zur Einstellung der Federvorspannung vorgesehenen Stellmittel ist insbesondere dann von Vorteil, wenn hierzu ein elektromotorischer Stellantrieb vorgesehen ist, für den durch die Merkmale der Ansprüche 11 bis 13 alternativ oder auch in Kombination nutzbare Gestaltungs- und Auslegungsmöglichkeiten angegeben sind.

Die durch die Merkmale des Anspruchs 14 angegebene, bevorzugte Gestaltung der Überwachungseinrichtung erlaubt auf einfache Weise die Erkennung von Fehlfunktionen wie z.B. ein Blockieren des Stellzylinders oder auch ein Zunehmen von Leckverlusten im Verbraucherkreislauf und, im Ergebnis, die Implementierung zusätzlicher Sicherheitsfunktionen.

Besonders vorteilhaft ist es, wenn, wie gemäß Anspruch 15 vorgesehen, zwischen das zur Betriebsdruckvorgabe vorgesehene Druckminderventil und das drucküberwachte hydraulische Antriebselement ein Stromregelventil geschaltet ist, mittels dessen ein definierter Wert eines einem drucküberwachten Antriebszylinder zuströmenden Hydraulikölstromes einstellbar und damit eine definierte Basis für einen Vergleich einer gemessenen Zeitspanne mit einem diesbezüglichen Erfahrungswert gewinnbar ist.

Weitere Einzelheiten der erfindungsgemäßen Überwachungseinrichtung ergeben sich aus der nachfolgenden Beschreibung eines bevorzugten Ausführungsbeispiels anhand der Zeichnung. Es zeigen:
- Fig. 1: ein elektrohydraulisches Blockschaltbild einer erfindungsgemäßen Überwachungseinrichtung am Beispiel eines Spannzylinders, der durch alternative Druckbeaufschlagung und -entlastung zweier Druckräume in alternative Funktionsstellungen steuerbar ist und
- Fig. 2a und 2b: alternative Funktionsstellungen von Sensorkolben der Überwachungseinrichtung, die alternativen Betriebsarten des Antriebszylinders der Spanneinrichtung gemäß Fig. 1 zugeordnet sind.

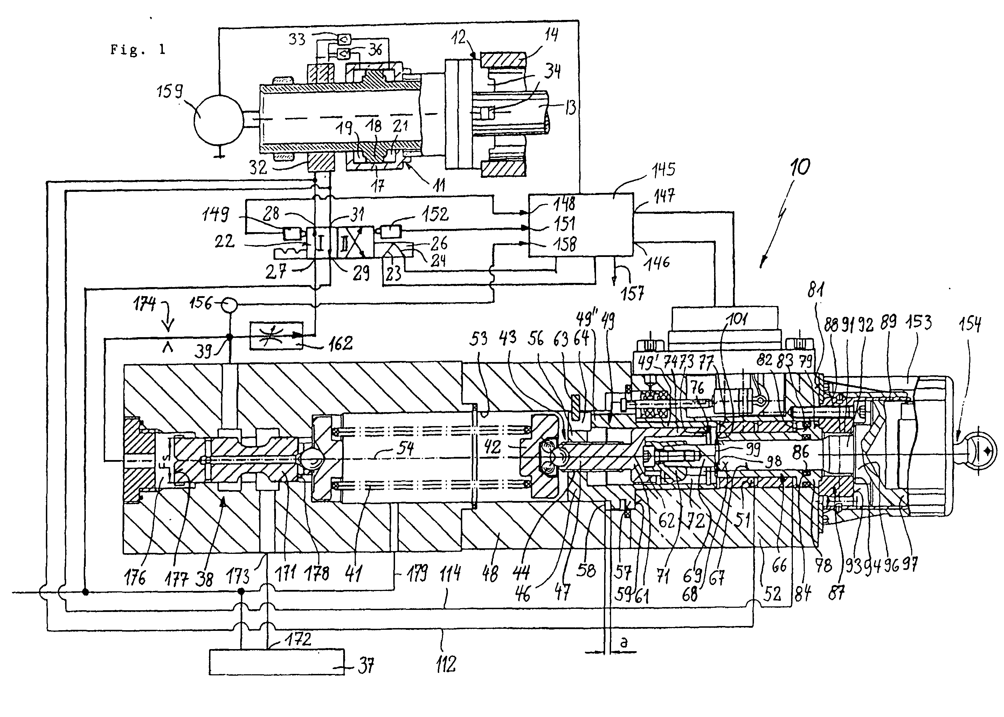

Zweck der in der Fig. 1 insgesamt mit 10 bezeichneten elektrohydraulischen Überwachungseinrichtung ist es allgemein, einen für den sicheren Betrieb einer Maschine erforderlichen Betriebsdruck eines hydraulischen Maschinenelements der Maschine fortlaufend zu überwachen und, falls der Betriebsdruck unter einen einstellbar vorgebbaren Wert absinkt, ein diesbezügliches elektrisches Anzeigesignal zu erzeugen, mittels dessen z.B. eine Notabschaltung der Maschine oder eine selbsttätige Einleitung von Sicherheitsfunktionen auslösbar sind.

Für das zur Erläuterung gewählte Ausführungsbeispiel sei angenommen, daß das funktions-überwachte Maschinenelement ein doppelt wirkender linearer Hydrozylinder 11 ist, z.B. der Spannzylinder einer hydraulischen Spannvorrichtung 12 einer durch diese repräsentierten Drehmaschine, wobei diese Spannvorrichtung 12, einerseits, ein Spannen eines z.B. rundstabförmigen Werkstücks 13 "von außen" und, andererseits, ein Spannen eines z.B. rohrförmigen Werkstücks 14 "von innen" ermöglicht. Diesen alternativen Spann-Funktionen der Spannvorrichtung 12 sind alternative Richtungen der Auslenkung des die Drehspindel 16 auf einem Abschnitt ihrer Länge außenseitig umgebenden Zylindergehäuses 17 relativ zu einem spindelfesten Kolbenflansch 18 zugeordnet, durch den innerhalb des Zylindergehäuses 17 zwei ringförmige Druckräume 19 und 21 druckdicht gegeneinander abgegrenzt sind, durch deren alternative Druckbeaufschlagung- und Entlastung die Richtung der Auslenkung des Zylindergehäuses 17 und damit die Art der Werkstück-Einspannung wählbar ist.

Zur Auswahl der Betriebsart, d.h. der Richtung der Auslenkung des Zylindergehäuses 17, die zu der gewünschten Art des Einspannens führt, ist ein als 4/2-Wege-Ventil ausgebildetes Magnetventil 22 mit gerasteten Funktionsstellungen I und II vorgesehen, das durch alternative Erregung zweier Steuerwicklungen 23 und 24 eines Schaltmagneten 26 aus der jeweils zuvor eingenommenen Schaltstellung I oder II in die dazu alternative Schaltstellung II bzw. I umschaltbar ist.

In der einen Schaltstellung I des Richtungs-Steuerventils 22 ist dessen P-Hochdruck-Versorgungsanschluß 27 mit dem A-Verbraucheranschluß 28 verbunden und der T-Rücklaufanschluß 29 mit dem B-Verbraucher 31; in der anderen Schaltstellung II ist der P-Versorgungsanschluß 27 mit dem B-Verbraucheranschluß 31 verbunden und der T-Rücklaufanschluß 29 mit dem A-Verbraucheranschluß 28.

Der A-Verbraucheranschluß 28 ist über eine insgesamt mit 32 bezeichnete Drehdurchführung und über ein entsperrbares Rückschlagventil 33 mit derjenigen "spannbackenseitigen" Druckkammer 21 des Hydrozylinders 11 verbunden, durch deren Druckbeaufschlagung bei gleichzeitiger Druckentlastung der anderen Zylinderkammer 19 das Gehäuse 17 des Hydrozylinders 11 eine auf alle Spannbacken 34 der Spannvorrichtung 12 zu gerichtete Verschiebung, gemäß der Darstellung nach rechts, erfährt, während der B-Verbraucheranschluß 31 über die Drehdurchführung 32 und ein weiteres entsperrbares Rückschlagventil 36 mit derjenigen Druckkammer 19 des Hydrozylinders 11 verbunden ist, durch deren Druckbeaufschlagung, bei gleichzeitiger Druckentlastung der "rechten" backenseitigen Druckkammer 21 das Zylindergehäuse 17 eine von den Backen 34 der Spannvorrichtung 12 weg gerichtete Verschiebung erfährt.

Die Drehdurchführung 32 ist erforderlich, da sich im Drehbetrieb der Maschine das Zylindergehäuse 17 mit der Drehspindel 16 dreht. Im ordnungsgemäßen Drehbetrieb der Maschine, d.h. wenn an einem der beiden Verbraucheranschlüsse des Richtungssteuerventils 22 der hohe Betriebsdruck ansteht, sind beide entsperrbare Rückschlagventile 33 und 36 geöffnet; fällt der Druck ab, so gehen beide Rückschlagventile 33 und 36 in ihre Sperrstellung über, so daß Öl aus den Druckkammern 19 und 21 des Hydrozylinders 11 nicht entweichen kann.

Zur Einstellung des Spanndruckes, der in die jeweilige Druckkammer 19 oder 21 des Hydrozylinders 11 eingekoppelt wird, ist ein zwischen das lediglich schematisch angedeutete Druckversorgungsaggregat 37 und den P-Versorgungsanschluß 27 des Richtungs-Steuerventils 22 geschaltetes Druckminderventil 38 für sich bekannter Bauart vorgesehen, bei dem der an seinem Ausgang 39 abgegebene, zur Druckversorgung des Hydrozylinders 11 genutzte Ausgangsdruck durch Einstellung der Vorspannung einer Ventilfeder 41 vorgebbar ist, wobei der Ausgangsdruck der Vorspannung dieser Feder proportional ist.

Das Druck-Minderventil 38 ist der Funktion nach ein geregeltes 3-Wege-Ventil, dessen Ventilkolben 171 durch die Vorspannung der Ventilfeder 41 in eine Extremal-Position gedrängt wird, in der sein mit dem Druckausgang 172 des Druckversorgungsaggregats 37 verbundener P-Versorgungsanschluß 173 über einen ventilinternen Strömungspfad großen Strömungsquerschnitts mit dem Ausgang 39 des Druckminderventils verbunden ist. Der momentan am Ausgang 39 des Druckminderventils anstehende Ausgangsdruck ist über eine Blende 174 in eine Steuerkammer 176 eingekoppelt, die einseitig axial beweglich durch eine Endstimfläche 177 des Ventilkolbens 171 des Betrags F_{S} begrenzt ist. Auf seiner anderen, federseitigen Endstirnfläche 178, deren effektiver Betrag F_{S} derselbe ist wie derjenige der Steuerfläche 177, die die Steuerkammer 176 begrenzt, ist der Ventilkolben 171 dem Druck ausgesetzt, der in dem die Ventilfeder 41 enthaltenden Raum 137 herrscht, der an die gemeinsame Tank-Rücklaufleitung 179 angeschlossen ist, an die auch weitere - nicht dargestellte - Verbraucher des hydraulischen Systems der Maschine angeschlossen sind. Steigt der Ausgangsdruck p_{A} des Druckminderventils 38 wegen einer Zunahme der Last an, so wird auf den Ventilkolben 171 eine der Federvorspannung entgegengesetzt gerichtete Kraft des Betrags F_{S} · P_{A} ausgeübt, mit der Tendenz, die Federvorspannung zu erhöhen. Sobald diese Kraft die Federvorspannung übersteigt, erfährt der Ventilkolben, unter der Voraussetzung, daß der Druck im Federraum 137 vernachlässigbar ist, eine Auslenkung im Sinne einer Reduzierung des Strömungsquerschnittes des vom P-Versorgungsanschluß 173 zum Druckausgang 39 des Druckminderventils führenden Strömungspfades und gelangt in eine Regelstellung, in der, je nach dem Druck p_{A}, der Druckausgang 39 abwechselnd mit dem P-Druckversorgungsanschluß 173 oder mit dem mit der Rücklaufleitung 179 verbundenen Federraum 137, jeweils mit kleinem Überströmquerschnitt, verbunden ist. In dieser Regelstellung entspricht der Ausgangsdruck des Druckminderventils 38 dem durch die Einstellung der Federvorspannung vorgewählten Betriebsdruck.

Zur Einstellung der Vorspannung der Ventilfeder, die zwischen dem Kolben 171 des Druckminderventils 38 und einem Ventilteller 42 eingespannt ist, ist ein insgesamt mit 43 bezeichneter Spindeltrieb vorgesehen, der eine mit einem zentralen Gewinde 44 einer insgesamt mit 46 bezeichneten Stellhülse in kämmendem Eingriff stehende Gewindespindel 47 hat, die durch Verdrehen in dem Gewinde 44 der Stellhülse 46, die gegen ein Verdrehen gegenüber dem Gehäuseteil 48 des Druckminderventils 38 gesichert ist, eine axiale Verschiebung erfährt und zentral an der der Ventilfeder 41 abgewandten Seite des Federtellers 42 angreift, der dadurch, je nach Drehrichtung der Gewindespindel 47, im Sinne einer Erhöhung oder einer Emiedrigung der Vorspannung der Ventilfeder 41 verschiebbar ist.

Die Stellhülse 46 ist, der Grundform nach, zylindrisch-topfförmig gestaltet und ist mit einem relativ dünnwandigen Abschnitt 49' ihres Hülsenmantels 49 in einer zentralen, durchgehenden Bohrung 51 eines Gehäuseblocks 52 der Überwachungseinrichtung 10 axial verschiebbar geführt, der an das die Ventilfeder 41 und den Federteller 42 sowie einen bodenseitigen Abschnitt der Stellhülse 46 aufnehmende Gehäuseteil 48 derart angesetzt ist, daß die zentrale Bohrung 51 des Gehäuseblocks 52 und die zentrale Bohrung 53 des die Feder 41 aufnehmenden Gehäuseteils 48 koaxial bezüglich der gemeinsamen zentralen Längsachse 54 des Druckminderventils 38 und der Überwachungseinrichtung 10 angeordnet sind.

Zwischen dem dünnwandigen Führungsabschnitt 49' des Hülsenmantels 49 und einem in die zentrale Bohrung 53 des Ventilgehäuseteils 48 hineinragenden, dickerwandigen, bodenseitigen Mantelabschnitt 49", der an den mit dem zentralen Gewinde 44 versehenenen, gleichsam die Spindelmutter bildenden Boden 56 der Stellhülse 46 anschließt, ist diese mit einem radial äußeren Ringflansch 57 versehen, durch dessen alternative Anlage an einander gegenüberliegenden, ebenen ringförmigen Stützflächen 58 und 59 des die Ventilfeder 41 enthaltenden Gehäuseteils 48 bzw. des Gehäuseblocks 52 der Überwachungseinrichtung 10 eine Anschlagbegrenzung der axialen Auslenkungen der Stellhülse 46 auf einen maximalen Auslenkungshub a erzielt ist.

Dieser maximale Auslenkungshub a, der der Differenz des axialen Abstandes der einander gegenüberliegenden ringförmigen Stützflächen 48 und 52 und der axialen Dicke des Ringflansches 57 der Stellhülse 46 entspricht, ist klein gegen den durch Verdrehen der Gewindespindel 47 erzielbaren, zur Einstellung einer erwünschten Feder-Vorspannung erforderlichen axialen Auslenkungshub des Federtellers 42 und beträgt nur etwa 1/10 bis 1/20 des insgesamt möglichen Feder-Einstellhubes.

Die Gewindespindel 47 geht vom Bodenbereich 61 einer der Grundform nach zylindrisch-topfförmigen Gleit-Führungshülse 62 aus, die im kreiszylindrischen Innenraum der Stellhülse 46 drehbar und relativ zur Stellhülse 46 axial hin- und her-verschiebbar gelagert ist.

Die Stellhülse 46 ist mittels eines in die zentrale Bohrung 53 des in die Ventilfeder 41 aufnehmenden Gehäuseteils 48 hineinragenden Keils oder Zapfens 63 der in gleitfähig-formschlüssigen Eingriff mit einer sich in axialer Richtung erstreckenden Außennut 64 des bodenseitigen Mantelabschnitts 49" der Stellhülse 46 steht, gegen ein Verdrehen um die zentrale Längsachse 54 der Gesamtanordnung gesichert.

In die zentrale Bohrung 51 des Gehäuseblocks 52 ist in koaxialer Anordnung bezüglich dessen zentraler Längsachse 54 ein Gleitführungsrohr 66 eingesetzt, das mit seiner inneren Mantelfläche 67 die Gleitfläche für die drehbare Lagerung einer mit der Gleitführungshülse 62 rotatorisch gekoppelten Stellwelle 68 bildet, die mit einem schlanken Fortsatz 69 in die Gleitführungshülse 62 der Gewindespindel 47 hineinragt. An diesem Fortsatz ist drehfest ein fahnenförmiges, radial abstehendes Dreh-Kupplungselement 71 befestigt, das durch formschlüssigen Eingriff mit einem Längsschlitz 72 des Hülsenmantels der Gleitführungshülse diese bei der Drehung der Stellwelle rotatorisch mitnimmt, was wegen des Gewindeeingriffs der Spindel 47 mit dem zentralen Gewinde 44 der Stellhülse 46 zu einer axialen Verschiebung des Federtellers 62 führt.

Der zur Einstellung einer maximalen Vorspannung der Ventilfeder nutzbare Auslenkungshub der Gleitführungshülse 62 beziehungsweise der Gewindespindel 47 ist durch Abstützung des Bodenbereichs 61 der Gleitführungshülse 62 am Boden 56 der Stellhülse 46 - durch Anschlagwirkung - begrenzt. Der zur Einstellung einer minimalen Federvorspannung nutzbare Auslenkungshub der Gleitführungshülse 62 ist durch axiale Abstützung der freien ringförmigen Endstimfläche 73 des Hülsenmantels 74 an einem Sprengring 76 begrenzt, der in eine innere Ringnut der Stellhülse 46 eingesetzt und in unmittelbarer Nähe der kreisringförmigen Endstirnfläche 77 ihres dünnerwandigen Mantelabschnitts 49' angeordnet ist.

In einer typischen Auslegung des Druckminderventils 38 und seiner Ventilfeder 49 ist mit der maximaler Federvorspannung entsprechenden Endstellung der Gleitführungshülse 62 ein Ausgangsdruck des Druckminderventils 38 um 80 bar verknüpft und mit der minimaler Vorspannung der Ventilfeder 41 entsprechenden Endstellung der Gleitführungshülse 62 ein Ausgangsdruck um 10 bar.

Der Außendurchmesser des Gleitführungsrohres 66 ist signifikant kleiner als der Durchmesser der durchgehenden zentralen Bohrung 51 des Gehäuseblocks 52 der Überwachungseinrichtung 10 und auch kleiner als der Innendurchmesser des dünnwandigen Abschnitts 49' der Stellhülse 46.

Das Gleitführungsrohr 66 hat in seinem äußeren, von der Steuerhülse 46 entfernten Ende einen radialen Dichtflansch 78, dessen äußere Ringstimfläche koplanar mit der äußeren Endstimfläche 81 des die Überwachungseinrichtung 10 enthaltenden Gehäuseblocks 52 verläuft. Der Dichtflansch 78 des Gleitführungsrohres 66 ist mit einer Außennut 82 versehen, in die ein Dichtring 83 eingesetzt ist, mittels dessen der Ringflansch 78 beziehungsweise das Gleitführungsrohr 66 gegen die axial durchgehende Bohrung 51 des Gehäuseblocks 52 der Überwachungseinrichtung 10 hochdruckfest abgedichtet ist. Im Bereich des Ringflansches 78 des Gleitführungsrohres 66 ist dieses mit einer Innennut 84 versehen, in die ein weiterer Dichtring 86 eingelegt ist, mittels dessen das Gleitführungsrohr 66 hochdruckfest gegen die das Gleitführungsrohr 66 durchsetzende Stellwelle 68 abgedichtet ist.

Das Gleitführungsrohr 66 und die in diesem drehbar gelagerte Stellwelle 68 sind gegen axiale Verrückungen relativ zu dem Gehäuseblock 52 gesichert.

Zur diesbezüglichen Sicherung des Gleitführungsrohres 66 und der Stellwelle 68 gegen axiale Verrückung dient eine insgesamt mit 87 bezeichnete zylindrisch-topfförmig gestaltete Ankerhülse, die in koaxialer Anordnung bezüglich der zentralen Längsachse 54 des Gehäuseblocks 52 an diesen so angesetzt ist, daß ihr Boden 88 an der äußeren Endstirnfläche 81 des Gehäuseblocks 52 anliegt und ihr dünnwandiger Mantel 89 von dem Gehäuseblock 52 wegweisend angeordnet ist.

Der Hülsenboden 88 hat eine zentral durchgehende Bohrung 91, durch die ein Übergangsabschnitt 92 der Stellwelle 68 hindurchtritt, dessen Durchmesser geringfügig kleiner ist als der Durchmesser der Durchgansbohrung 91 der Ankerhülse 87. Der radiale Dichtflansch 78 des Gleitführungsrohres 68 ist mit einem peripheren Bereich seiner äußeren Ringstimfläche 79 an dem ihm zugewandten Bohrungsrand der Ankerhülse 87 axial abgestützt. An der dem Dichtflansch 78 des Gleitführungsrohres 68 abgewandten, mantelseitigen Ringfläche 93 des Hülsenbodens 88 ist die Stellwelle 68 mit einer radialen Ringstimfläche 94 eines an den Übergangsabschnitt 92 der Stellwelle 68 anschließenden Stützabschnittes 96 größeren Durchmessers axial abgestützt, auf den ein rohrförmiger Endabschnitt 97 der Stellwelle 68 folgt, dessen Außendurchmesser dem Innendurchmesser des Hülsenmantels 89 entspricht, der ein äußeres Drehlager für die Stellwelle 68 bildet.

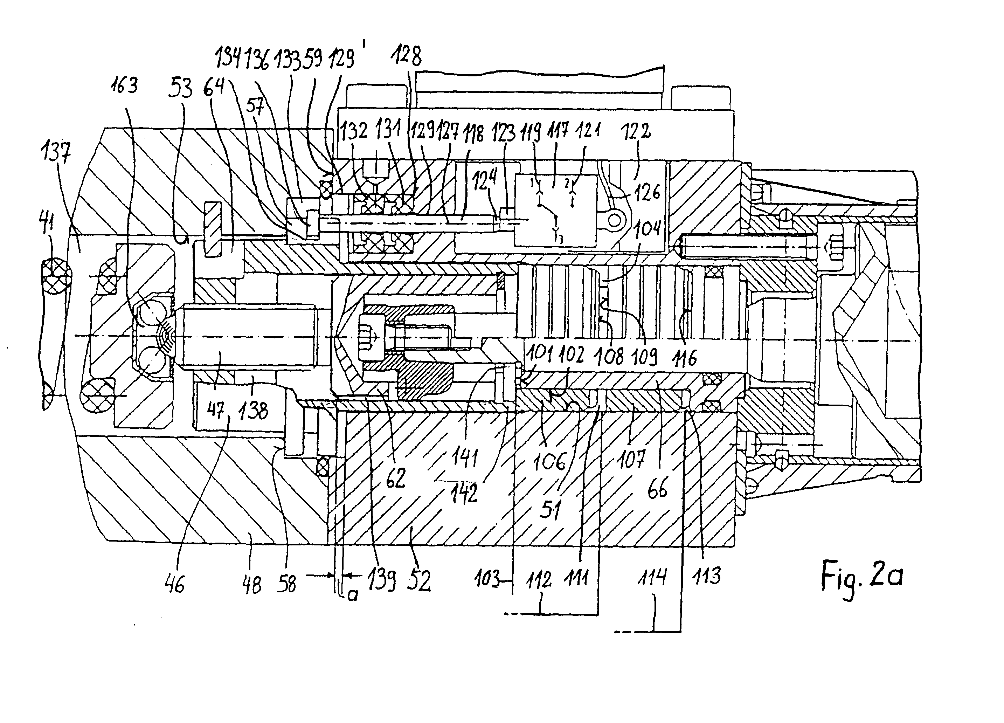

Ein Ausrücken der Stellwelle 68 aus dem Gleitführungsrohr 66 ist durch einen Sprengring 98 verhindert, der in eine äußere Ringnut 99 des das Gleitführungsrohr 66 durchsetzenden Abschnitts der Stellwelle 68 eingesetzt ist und sich an der inneren Ringstimfläche 101 des Gleitführungsrohres 66 axial abstützt (Fig. 2a).

Durch die zentral durchgehende Bohrung 51 des Gehäuseblocks 52 der Überwachungseinrichtung 10 ist radial außen und durch die äußere Mantelfläche 102 des Gleitführungsrohres 66 radial innen ein Ringraum 104 begrenzt, der axial gehäusefest durch den Dichtflansch 78 des Gleitführungsrohres 66 abgeschlossen ist und sich bis etwa zu einer Quermittelebene 103 der zentralen Bohrung 51 des Gehäuseblocks 52 erstreckt, die in der dargestellten Position der Stellhülse 46 durch die Ebene markiert ist, in der die ebene ringförmige Endstirnfläche 77 der Stellhülse 46 verläuft.

In diesem Ringraum sind zwei Ringkolben 106 und 107 axial verschiebbar angeordnet, die radial innen gegen das Gleitführungsrohr 66 und radial außen gegen die zentrale Bohrung 51 des Gehäuseblocks 52 der Überwachungseinrichtung 10 abgedichtet sind.

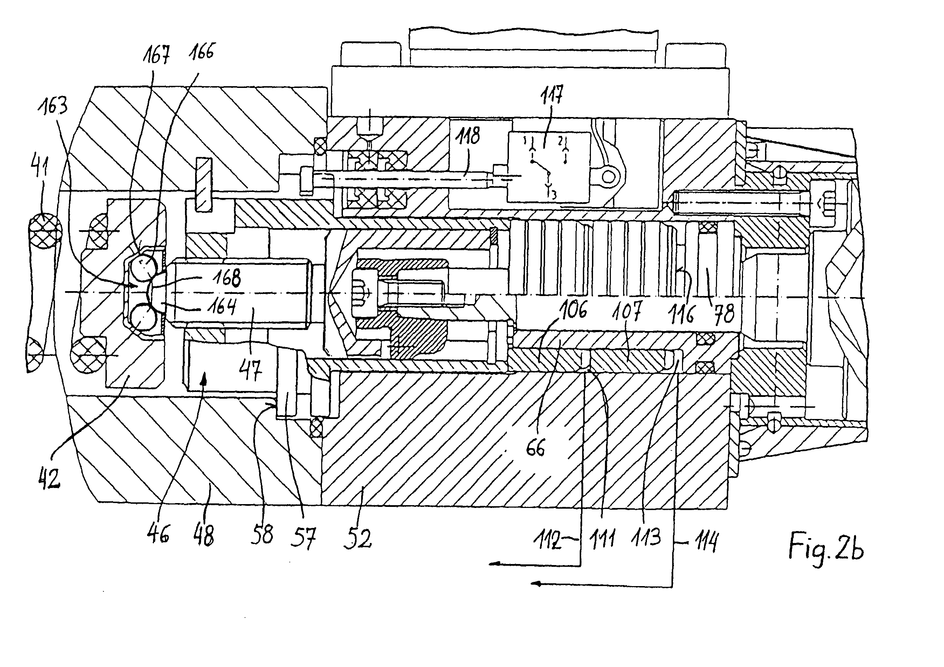

Die einander gegenüberliegend angeordneten Ringstirnflächen 108 und 109 der beiden Ringkolben 106 und 107 bilden die axialen Begrenzungen einer ersten ringraumförmigen Druck-Sensorkammer 111 (Fig. 2a), die beim dargestellten Ausführungsbeispiel über eine Druck-Sensorleitung 112 mit dem A-Verbraucheranschluß 28 des Richtungs-Steuerventils 22 verbunden ist. Der dem Dichtflansch 78 des Gleitführungsrohres 66 benachbart angeordnete Ringkolben 107 bildet die axial bewegliche Begrenzung einer zweiten ringraumförmigen Druck-Sensorkammer 113 (Fig. 2b), die axial gehäusefest durch den Dichtflansch 78 des Gleitführungsrohres 66 abgeschlossen ist. Diese zweite Drucksensorkammer 113 ist über eine weitere Drucksensorleitung 114 mit dem B-Verbraucheranschluß des Richtungssteuerventils 22 verbunden.

Ordnungsgemäßen Betrieb des Druckversorgungsaggregats 37, des Druckminderventils 38 und der Spanneinrichtung 12 vorausgesetzt, ist in der Funktionsstellung I des Richtungs-Steuerventils 22 der hohe Ausgangsdruck des Druckminderventils in die durch die beiden Ringkolben 106 und 107 axial begrenzte erste Drucksensorkammer 111, die A-Sensorkammer, eingekoppelt, und die zweite Sensorkammer 113, die B-Sensorkammer 113, ist druckentlastet. Dies hat zur Folge, daß der dem Dichtflansch 78 des Gleitführungsrohres 66 benachbarte Ringkolben 107 in Anlage mit dem Dichtflansch 78 gedrängt wird und der andere Ringkolben 106 gegen die Stellhülse 46 gedrängt wird. Ist, andererseits, das Richtungs-Steuerventil 22 in seine Funktionsstellung II geschaltet, so ist der Betriebsdruck in die B-Sensorkammer 113 eingekoppelt, während die A-Sensorkammer 111 druckentlastet ist, mit der Folge, daß auf die Stellhülse 46 eine Kraft derselben Richtung und desselben Betrages wirkt wie im Falle der Druckeinkopplung in die A-Sensorkammer 111.

Die Beträge der Ringkolben-Stirnflächen 108 und 109, die die A-Sensorkammer 111 axial begrenzen, und die Kolben-Ringstimfläche 116, des dichtflanschseitigen Ringkolbens 107, die die axial bewegliche Begrenzung der B-Sensorkammer 113 bildet, sind jeweils gleich und signifikant, z.B. um 10 bis 15 % größer als die dem Ausgangsdruck des Druck-Minderventils 38 ausgesetzte Steuerfläche F_{S}, durch deren Druckbeaufschlagung der Kolben 171 des Druckminderventils gegen die Vorspannung der Ventilfeder 41 in die Regelstellung gelangt, die dem durch die Einstellung der Federvorspannung vorgegebenen Ausgangsdruck des Druckminderventils entspricht.

Durch diese Dimensionierung der Ringkolben 106 und 107 ist sichergestellt, daß, wann immer am A-Verbraucheranschluß 28 oder am B-Verbraucheranschluß 31 des Richtungs-Steuerventils 22 der der Federvorspannung entsprechende Betriebsdruck ansteht, die Stellhülse 46 die mit ordnungsgemäßer Funktion der Spanneinrichtung 12 verknüpfte Endstellung einnimmt, die durch Anlage des radial äußeren Ringflansches 57 der Stellhülse an der ringförmigen Stützfläche 58 des die Ventilfeder 41 aufnehmenden Gehäuseteils 48 markiert ist. In dieser Position der Stellhülse 46 ist ein als Mikroschalter ausgebildeter Endschalter 117, der über ein mit der Stellhülse 46 bewegungsgekoppeltes Betätigungselement 118 umschaltbar ist, in seine Grundstellung geschaltet, in der an einem ersten Schalterausgang 119 ein Positions-Anzeigesignal abgegeben wird, das für die genannte Position der Stellhülse 46 charakteristisch ist.

Wann immer der Druck an demjenigen Verbraucherausgang 28 oder 31 des Richtungssteuerventils 22, an dem entsprechend der Schaltstellung I oder II der Ausgangsdruck des Druckminderventils 38 anstehen sollte, niedriger ist als dessen mit dem Verhältnis F_{S}/F_{R} (F_{R} = effektiver Betrag der Ringstimflächen der Sensorkolben 106 und 107) multiplizierte Sollwert, wird die Stellhülse 46 durch die Vorspannung der Ventilfeder 41 in die in der Fig. 1 dargestellte Position geschoben, in der ihr radialer Ringflansch 57 um den Hub a von der ringförmigen Stützfläche 58 des die Ventilfeder 41 aufnehmenden Gehäuseteils 48 abgehoben ist. In dieser Position der Stellhülse 46 ist der Endschalter 117 in eine Schaltstellung umgeschaltet, in der an einem zweiten Schalterausgang 121 ein hierfür charakteristisches Ausgangssignal abgegeben wird. Wenn und so lange dieses Signal am zweiten Ausgang 121 des Schalters 117 ansteht, darf der Drehantrieb der Spindel 16 der Drehmaschine nicht aktivierbar sein.

Der Schalter 117 ist bei dem zur Erläuterung gewählten Ausführungsbeispiel als elektromechanischer Schalter ausgebildet, der durch parallel zur zentralen Längsachse 54 in alternativen Richtungen erfolgende Verschiebung umschaltbar ist und ein Schaltglied 123 hat, das durch eine Schalterfeder 126 in Anlage mit dem freien Ende 124 des als nadelförmiger Stab ausgebildeten Betätigungselements 118 gehalten ist. Das Betätigungselement 118 tritt mit zur zentralen Längsachse parallelem Verlauf seiner Längsachse 127 durch eine zweistufige, insgesamt mit 128 bezeichnete Bohrung des Gehäuseblocks 52 hindurch, die sich zwischen dem ölfreien Aufnahmeraum 122 für den Schalter 117 und der federraumseitigen ebenen Stützfläche 59 des Gehäuseblocks 52 erstreckt. Diese Stufenbohrung 128 hat einen vom ölfreien Schalter-Aufnahmeraum 122 ausgehenden Führungsabschnitt 129, dessen Durchmesser, mit geringem Übermaß, demjenigen des nadelförmigen Betätigungselements 118 entspricht und einen gegenüber diesem Führungsabschnitt 129 erweiterten, durch eine radiale Schulter abgesetzten Dichtungsabschnitt 129', innerhalb dessen das Betätigungselement 118 durch zwei unmittelbar nebeneinander angeordnete Lippendichtungen 131 und 132 gegen den Dichtungsabschnitt 129' abgedichtet ist. Der Dichtungsabschnitt 129' mündet in den mit Hydrauliköl verfüllten Ringraum 133, innerhalb dessen der radial äußere Ringflansch 57 der Stellhülse 46 angeordnet und zwischen den ringförmigen Stützflächen 58 und 59 des Gehäuseteils 48 und des Gehäuseblocks 52 hin und her verschiebbar ist.

Zur Bewegungskopplung des Betätigungselements 118 mit der Stellhülse 46 ist deren radialer Ringflansch 57 mit einer Außennut 134 versehen, in die das Betätigungselement 118 mit einem Ankerkopf 136 formschlüssig, d.h. zug- und schubfest eingehängt ist. Durch die erläuterte Gestaltung des Betätigungselements 118 und Abdichtung desselben gegenüber dem unter demselben hydraulischen Druck wie der Federraum 137 stehenden Ringraum 133, d.h. dem Druck des vom Hydrozylinder 11 am Beginn des Spannbetriebes zurückströmenden Hydrauliköls steht, wird eine besonders reibungsarme Gleitführung des Betätigungselements 118 im Gehäuseblock 52 erzielt, die dem Auflösungsvermögen der Überwachungseinrichtung 10 zugute kommt.

Die kommunizierende Verbindung des Ringraumes 133, in dem der radiale Ringflansch 57 der Stellhülse 46 angeordnet ist, mit dem Feder-Aufnahmeraum 137 des dem Druckbegrenzungsventil 38 zuzurechnenden Gehäuseteils 48 kommt dadurch zustande, daß der Durchmesser des in den Federaufnahmeraum 137 hineinragenden Abschnitts 49" der Stellhülse 46 geringer ist als der Durchmesser der zentralen Bohrung 53 des die Feder 41 aufnehmenden Gehäuseteils 48.

Der Federraum 137 steht über die zur Verdrehsicherung der Stellhülse vorgesehene Außennut 64, die in den bodenseitigen Innenraumbereich 138 der Stellhülse 46 mündet, und eine sich zwischen diesem und dem Längsschlitz 72 des Hülsenmantels der Gleitführungshülse 62 erstreckende äußere Längsnut 139 auch mit dem sensorkolben-seitigen Innenraum 141 in kommunizierender Verbindung, der auf einem überwiegenden Teil seiner Länge durch die Gleitführungshülse 62 und auf einem kurzen, kolbenseitigen Abschnitt 142 des dünnwandigen Mantelabschnitts 49' der Stellhülse 46 durch diese berandet ist.

Für das Druckminderventil 38 ist eine Gestaltung vorgesehen, bei der die Kolben-Stimfläche F_{S} seines Ventilkolbens, die dem geregelten Druck ausgesetzt ist, denselben Betrag hat wie seine den Federraum 137 begrenzende Stimfläche. Tritt im Federraum 137 eine Druckerhöhung um den Betrag Δp auf, so entspricht dies einer Erhöhung der Feder-Vorspannkraft um den Betrag F_{S} · Δp und, im Ergebnis, einer Erhöhung des in die jeweilige Sensorkammer 111 oder 113 der Überwachungseinrichtung 10 eingekoppelten Druckes um denselben Betrag Δp, mit der Folge, daß die aus der Druckerhöhung um Δp resultierenden Kräfte, die auf den stellhülsenseitigen Sensorkolben 106 wirken oder über diesen an dem zweiten Sensorkolben 107 angreifenden Kräfte durch die Einkopplung entsprechend erhöhter Drücke in die Sensorkammer 111 beziehungsweise 113 geringfügig überkompensiert werden und aus der - zeitweisen - Druckerhöhung um Δp keinerlei Fehlschaltung des Endschalters 117 resultieren kann, da die Stellhülse 46, ordnungsgemäße Funktion der Gesamtanlage vorausgesetzt, keine Verrückung aus ihrer in den Figuren 2a und 2b dargestellten Anschlagposition erfährt. Die Überwachungseinrichtung 10 ist somit vollkommen unempfindlich gegen Druckstöße, die im Federraum 137 beziehungsweise in der T-Rücklaufleitung 179 (Fig. 1) auftreten können. Dies ist insbesondere dann von Bedeutung, wenn die Betriebsdrücke, mit denen die Spannvorrichtung 12 betrieben werden soll, im niedrigen Druckbereich zwischen 40 und 20 bar liegen.

Zur Erläuterung der Funktion sei für den Endschalter 117 angenommen, daß das an seinem ersten Ausgang 119 bei ordnungsgemäßer Funktion der Spannvorrichtung 12 abgegebene Ausgangssignal abfällt, wenn die Stellhülse 46 etwa den halben Wert a/2 ihres maximalen Auslenkungshubes a ausgeführt hat und sodann das Ausgangssignal für fehlerhafte Funktion am zweiten Ausgang 121 des Schalters ansteht. Desgleichen wird der Endschalter 117 in seine für ordnungsgemäße Funktion charakteristische Schaltstellung geschaltet, wenn die Stellhülse, ausgehend von der in der Fig. 1 dargestellten Position den halben maximalen Auslenkungshub in Richtung auf ihre in den Figuren 2a und 2b dargestellten Endstellung ausgeführt hat.

Zur Erläuterung weiterer Funktionen der Überwachungseinrichtung 10 sei nunmehr wieder auf das elektrohydraulische Blockschaltbild der Fig. 1 Bezug genommen:

Die Überwachungseinrichtung 10 umfaßt eine lediglich schematisch angedeutete elektronische Steuereinheit 145, die z.B. durch geeignete Programmierung einer im übrigen nicht dargestellten SPS-Steuerung oder einer CNC-Steuerung der durch die Spannvorrichtung 12 repräsentierten Drehmaschine implementiert sein kann.

Dieser elektronischen Steuereinheit sind an separaten Eingängen 146 und 147 die alternativen Ausgangssignale des Endschalters 117 zugeleitet. An einem dritten Eingang 148 ist der elektronischen Steuereinheit 145 das Ausgangssignal eines Positions-Überwachungsschalters 149 zugeleitet, das anzeigt, daß sich der Kolben des Richtungs-Steuerventils 22 in seiner der Funktionsstellung I entsprechenden Position befindet. An einem vierten Eingang 151 ist der elektronischen Steuereinheit 145 das Ausgangssignal eines weiteren Positions-Überwachungsschalters 152 zugeleitet, das anzeigt, daß sich der Kolben des Richtungs-Steuerventils 22 in seiner der Funktionsstellung II dieses Ventils entsprechenden Position befindet.

Es sei davon ausgegangen, daß dem Innen-Spannbetriebsmodus der Spannvorrichtung 12 die Funktionsstellung I und dem Außen-Spannbetriebsmodus die Funktionsstellung II des Richtungs-Steuerventils zugeordnet sind. Soll die Drehmaschine im Innen-Spannbetriebsmodus betrieben werden, so wird für die Vorbereitung des Drehbetriebs zunächst das Richtungs-Steuerventil 22 in die dem Außenspann-Betrieb zugeordnete Funktionsstellung II geschaltet, in der die Spannbacken 34 radial nach außen gerückt sind, d.h. die Spannvorrichtung 12, bezogen auf den Innen-Spannbetrieb "entspannt" ist und ein im Innen-Spannbetrieb zu bearbeitendes Werkstück 14 in die für das Einspannen geeignete Position gebracht werden kann. In diesem "geöffneten" Zustand der Spannvorrichtung 12 wird der für die Werkstückbearbeitung erforderliche Betriebsdruck eingestellt. Die hierfür erforderliche Einstellung des Druckminderventils 38 erfolgt z.B. manuell mittels eines Drehgriffs 153, der in üblicher Weise durch Entriegelung eines schematisch dargestellten Schlosses 154 mit dem aus der Ankerhülse 87 austretenden rohrförmigen Endabschnitt 97 der Stellwelle 68 koppelbar ist. Zur Erfassung des einzustellenden Betriebsdruckes ist ein von dem Ausgang 39 des Druckminderventils 38 angeschlossenes Druckmeßgerät 156 vorgesehen.

Es versteht sich, daß zur Betriebsdruck-Einstellung auch ein - nicht dargestellter - elektromotorischer Stellantrieb vorgesehen sein kann, der über einen diesbezüglichen Solldruck-Steuerausgang 157 der elektronischen Steuereinheit 145 ansteuerbar ist. Für diese Art der Betriebsdruck-Einstellung wird als Druckmeßgerät 156 ein elektronischer Drucksensor verwendet, dessen druckcharakteristisches Ausgangssignal einem diesbezüglichen Istwert-Eingang 158 der elektronischen Steuereinheit zugeleitet ist, die den Druck-Istwert mit einem einstellbar vorgebbaren Sollwert vergleicht und aus diesem Vergleich das für den Stellantrieb erforderliche Ausgangssignal am Sollwertsteuerausgang 157 abgibt.

Einfache Möglichkeiten der Betriebsrduckeinstellung mittels eines elektromotorischen Stellantriebs können auch darin bestehen, daß als Stellmotor ein Schrittmotor vorgesehen ist, der durch Ansteuerung mit einer vorgebbaren Anzahl von Steuerimpulsen, mit denen jeweils ein inkrementaler Stellhub verknüpft ist, zur Ausführung des Vorspann-Stellhubes ansteuerbar ist, und es kann auch ein analoges oder digitales Wegmeßsystem zur Überwachung des Vorspann-Stellhubes der Spindel 47 beziehungsweise der Gleitführungshülse 62 und/oder der Ventilfeder 41 beziehungsweise ihres Federtellers 42 vorgesehen sein.

Während der Betriebsdruck-Einstellphase ist der Ausgangsdruck des Druckminderventils 38 in den gemäß der Darstellung der Fig. 1 linken Druckraum 19 des Hydrozylinders 11 eingekoppelt, während der rechte Druckraum 21 druckentlastet ist. Das Zylindergehäuse 17 befindet sich im stationären Zustand der Einstellphase in seiner zur Drehdurchführung 32 hin versetzten Endstellung. Der am B-Verbraucheranschluß 31 des Richtungs-Steuerventils 22 anstehende Druck ist auch in die zweite Sensorkammer 113 der Überwachungseinrichtung 10 eingekoppelt, deren andere Drucksensorkammer 111 druckentlastet ist. Beide Sensorkolben 106 und 107 sind gemäß der Darstellung der Fig. 2b nach links verschoben, und die Stellhülse 46 ist mit ihrem Ringflansch 57 an der radialen ringförmigen Stützfläche 58 des die Ventilfeder 41 aufnehmenden Gehäuseteils 48 abgestützt. Der Endschalter 117 nimmt seine Grundstellung ein, in der das Schalter-Ausgangssignal am ersten Schalterausgang 119 ansteht. Solange dieses Schalter-Ausgangssignal - am ersten Schalterausgang 119 - vorliegt und ein "internes" Betriebsart-Wählsignal der elektronischen Steuereinheit ansteht, das die Einstellung der elektronischen Steuereinheit 145 auf Innen-Spannbetrieb signalisiert, kann der Drehantrieb 159 (Fig. 1) der Drehspindel 16 nicht in Gang gesetzt werden.

Zum Einspannen des Werkstücks 14 wird, manuell oder programmgesteuert ein Steuerstromimpuls der elektronischen Steuereinheit 145 ausgelöst, durch den das Richtungs-Steuerventil 22 in seine Funktionsstellung I umgeschaltet wird. In dieser Funktionsstellung des Richtungssteuerventils 22 ist nunmehr der linke Druckraum 19 des Hydrozylinders 11 druckentlastet und der rechte Druckraum 21 des Hydrozylinders mit dem P-Versorgungsanschluß 27 des Richtungs-Steuerventils 22, d.h. mit dem Druckausgang 39 des Druckminderventils 38 verbunden. Mit dem Umschalten des Richtungs-Steuerventils 22 in dessen Funktionsstellung I setzt die Spann-Bewegung des Zylindergehäuses 17 "nach rechts" ein, wobei der Druck in der rechten Druckkammer 21 zunächst, entsprechend dem Bewegungswiderstand, niedrig bleibt. Der in die erste Sensorkammer 111 eingekoppelte Druck ist entsprechend niedrig und die zweite Sensorkammer 113 ist druckentlastet, mit der Folge, daß die Vorspannung der Ventilfeder 41 ausreicht, die Stellhülse 46 und die Sensorkolben 106 und 107 um den Hub a in Richtung auf den Dichtflansch 78 bis in Anlage des Ringkolbens 107 mit diesem Flansch 78 zu verschieben, d.h. in die in der Fig. 1 dargestellte Position der Stellhülse 46 und der Kolben 106 und 107. Im Verlauf dieser Verschiebebewegung wird der Mikroschalter 117 umgeschaltet, so daß nunmehr das Schalter-Ausgangssignal am zweiten Ausgang 121 des Mikroschalters bzw. am zweiten Eingang 147 der elektronischen Steuereinheit 145 ansteht. Solange dies der Fall ist, d.h. das Zylindergehäuse 17 gleichsam frei beweglich ist, bis mit dem Anlegen der Spannbacken 34 an das Werkstück 14 der zum Spannen der Spannvorrichtung 12 erforderliche Druck im rechten Druckraum 21 des Hydrozylinders 11 ansteigt, kann der Drehantrieb 159 der Drehspindel 16 nicht aktiviert werden.

Erst wenn der in dieser Druckkammer 21 herrschende Druck, der auch in die erste Sensorkammer 111 eingekoppelt ist, den Mindestwert von 85 % bis 90 % des durch die eingestellte Vorspannung der Ventilfeder 51 eingestellten Soll-Betriebsdruckes erreicht, beziehungsweise überschreitet wird der an der Stellhülse 46 abgestützte Sensorkolben 106 zusammen mit dieser wieder in Richtung auf die ringförmige Stützfläche 58 des Ventilgehäuseteils 48 im Sinne einer geringfügigen Erhöhung der Federvorspannung verschoben, wobei der Mikroschalter 117 nach etwa dem halben Wert des vollständigen Hubes a wieder in seine Grundstellung zurückfällt, in der das Schalter-Ausgangssignal dem ersten Überwachungseingang 146 der elektronischen Steuereinheit 145 zugeleitet wird. Der Drehantrieb 159 der Drehspindel 16 ist jetzt aktivierbar und kann manuell oder programmgesteuert für den Bearbeitungsbetrieb der Drehmaschine eingeschaltet werden. Das für das Innen-Spannen Ausgeführte gilt analog für das Aussen-Spannen.

Tritt in dem dem Betriebsdruck ausgesetzten Teil des hydraulischen Systems, bedingt z.B. durch einen Leitungsbruch, ein Druckabfall auf, so reagiert die Überwachungseinrichtung hierauf durch Auslenkung der Stellhülse aus ihrer in den Figuren 2a und 2b dargestellten Anschlag-Position, und der Mikroschalter 117 wird umgeschaltet, mit der Folge, daß der Drehantrieb 159 still gesetzt wird, um die Gefahr zu vermeiden, die sich aus einem Lösen der Spannvorrichtung 12 ergeben würde.

Eine weitere Sicherheitsfunktion der Überwachungseinrichtung 10 wird, im wesentlichen durch eine geeignete Auslegung der elektronischen Steuereinheit 145, dadurch erreicht, daß die Zeitspanne erfaßt wird, die ab dem Umschalten des Richtungs-Steuerventils 22 in die für den vorgewählten Spann-Betriebsmodus erforderliche Funktionsstellung I oder II verstreicht, bis der durch die Einstellung des Druckminderventils 38 vorgegebene Betriebsdruck erreicht ist und diese Zeitspanne mit einem für ordnungsgemäße Funktion der Spannvorrichtung 12 charakteristischen Erfahrungswert verglichen wird.

Ist die gemessen Zeitspanne signifikant kürzer als der Erfahrungswert, so ist dies ein Indiz dafür, daß der Hydrozylinder 11 "stehen bleibt" - blockiert - bevor die Spannwirkung erzielt wird, und die elektronische Steuereinheit generiert eine Signalkombination, die verhindert, daß der Drehantrieb 159 aktiviert werden kann. Des weiteren wird ein Steuersignal erzeugt, durch das das Richtungs-Steuerventil 22 wieder in die dem geöffneten Zustand der Spannvorrichtung 12 zugeordnete Funktionsstellung II oder I zurückgeschaltet wird.

Ist die gemessene Zeitspanne signifikant länger als der Erfahrungs-Vergleichswert, so ist dies ein Indiz dafür, daß ein Leck im Hochdruck führenden Kreis vorhanden ist und es wird ebenfalls eine Signalkombination erzeugt, die verhindert, daß der Drehantrieb 159 eingeschaltet werden kann.

Um definierte Bedingungen zu schaffen, die eine zuverlässige Bewertung der vom Umschalten des Ventils 22 bis zum Ansteigen des Druckes auf den Betriebsdruck verstreichenden, gemessenen Zeitspanne ermöglichen, ist zwischen das Druckminderventil 38 und den P-Versorgungsanschluß 27 des Richtungs-Steuerventils 22 ein Strom-Regelventil 162 geschaltet, das den dem Hydrozylinder 11 zugeleiteten Hydraulikölstrom auf einem definierten Wert hält, der bis kurz vor dem Erreichen des Betriebsdruckes im wesentlichen konstant bleibt. Das Stromregelventil 162 ist zweckmäßigerweise als einstellbares Ventil ausgebildet, so daß, z.B. für den Fall, daß ein empfindliches Werkstück 13 oder 14 zur Bearbeitung ansteht und mit relativ niedrigem Spanndruck gearbeitet werden muß, ein "vorsichtiges" - langsames - Anfahren der Spannposition der Spannbacken 34 möglich ist und ein allzu schlagartiges Ansteigen des Druckes vermieden werden kann.

Um die beim Einstellen der Vorspannung der Ventilfeder 41 zu überwindende Reibung möglichst gering zu halten, ist der Federteller 42 über ein diesen zentrierendes Wälzlager 163 am freien Ende 164 der Gewindespindel 47 abgestützt. Dieses Wälzlager 163 ist in der Art eines Schrägkugellagers ausgebildet, dessen Lagerkugeln 166 zwischen einer federtellerseitigen konischen, zum freien Ende 164 der Gewindespindel 47 hin sich erweiternden Abwälzfläche 167 und dem halbkugelförmig gestalteten freien Ende 164 der Gewindespindel 47 eingespannt sind. Die Radien der Lagerkugeln 166 und der Radius des halbkugelförmigen Stützendes 164 der Gewindespindel sowie die Anordnung und Neigung der konischen Wälzfläche 167 des Federtellers 42 sind dahingehend aufeinander abgestimmt, daß der Radius der mit der zentralen Achse 54 koaxialen Kreisbahn 168, entlang derer die Lagerkugeln 166 sich auf dem halbkugelförmigen Spindelende 164 abwälzen können, gleich oder annähernd gleich dem Radius der Lagerkugeln 166 ist.

## Patentansprüche

1. Elektrohydraulische Überwachungseinrichtung (10) für einen doppelt wirkenden Hydrozylinder (11), der durch alternative Druckbeaufschlagung und -entlastung zweier durch den Zylinderkolben gegeneinander abgegrenzter Druckräume (19,21) in zwei, alternativen Auslenkungskonfigurationen seines Kolbens und des Zylindergehäuses entsprechenden unterschiedlichen Funktionen benutzbar ist, in denen, z.B. aus Sicherheitsgründen, die Aufrechterhaltung definierter Betriebsdrücke erforderlich ist, zu deren Vorgabe ein Druckminderventil (38) vorgesehen ist, mittels dessen vom hohen Ausgangsdruck eines Druckversorgungsaggregats ein definierter, in den der jeweiligen Funktion des Hydrozylinders (11) zugeordneten Druckraum einkoppelbarer Druck ableitbar ist, der durch Einstellen der Vorspannung einer Ventilfeder (41) mittels eines Spindeltriebes vorgebbar ist, die in einem unter dem Druck abströmenden Hydrauliköls des hydraulischen Systems stehenden Federraum (137) angeordnet ist, der einseitig axial beweglich durch eine Stellhülse (46) berandet ist, die innerhalb eines begrenzten axialen Hubbereiches a zwischen durch Anschlagwirkung mit Gehäuseelementen markierten alternativen Endstellungen verschiebbar ist, mit denen alternative Schaltstellungen eines in einem ölfreien Gehäuseraum (122) angeordneten Schalters (117) verknüpft sind, der durch ein mit der Stellhülse bewegungsgekoppeltes Betätigungselement (118) betätigbar ist, wobei zur Erfassung des jeweils in den Hydrozylinder eingekoppelten Betriebsdruckes zwei axial beweglich durch zwei Sensorkolben (106,107) begrenzte, mit je einem der Druckräume (19,21) des Zylinders in kommunizierender Verbindung stehende Sensorkammem vorgesehen sind, durch deren alternative Druckbeaufschlagung und Entlastung die Stellhülse jeweils in dieselbe Endstellung gedrängt wird, die mit einer der beiden Schaltstellungen des elektrischen Schalters (117) verknüpft ist, **gekennzeichnet durch** die folgenden Merkmale:
a) Die Sensorkolben sind als Ringkolben ausgebildet, die radial außen gegen eine zentral durchgehende Bohrung (51) eines Gehäuseblocks (52) der Überwachungseinrichtung (10) und radial innen gegen die äußere Mantelfläche (102) eines Gleitführungsrohres (66) abgedichtet sind, das mit einem radialen Endflansch (78) an dem der Feder (41) abgewandten Endabschnitt der Bohrung (51) gegen diese abgedichtet ist und gegen axiale Verrückung relativ zum Gehäuseblock (52) gesichert ist;
b) die Stellhülse (46) ist zylindrisch topfförmig ausgebildet; ihr Boden ist zur Feder (41) hinweisend angeordnet, und die Hülse ist mit ihrem zu dem benachtbarten Sensorkolben (106) hinweisenden Mantelabschnitt (49'), an dessen innerhalb der Bohrung angeordneter Ringstimfläche (77) der Sensorkolben (106) axial abstützbar ist, in der zentralen Bohrung (51) gleitend verschiebbar geführt; ihr zwischen den Endstellungen möglicher axialer Auslenkungshub a ist **durch** Anschlagwirkung eines radialen Ringflansches (56) der Stellhülse mit einander gegenüberliegend angeordneten ringförmigen gehäuseseitigen Stimflächen (58 u. 59) markiert, wobei die Hülse gegen ein Verdrehen gesichert ist.
c) Die Gewindespindel (47) ist als bodenseitiger Fortsatz einer innerhalb des Mantels der Stellhülse (46) drehbar und axial gleitfähig gelagerten, zylindrisch-topfförmig gestalteten Gleitführungshülse (62) ausgebildet und in einer durchgehenden Gewindebohrung (44) des Bodens (56) der die Funktion der Spindelmutter des Spindeltriebes vermittelnden Stellhülse (46) schraubbar geführt und greift mit ihrem freien Ende zentral an einem zum Spannen der Ventilfeder (41) axial beweglichen Federteller (42) an;
d) in dem Gleitführungsrohr (66) ist zentral eine Stellwelle drehbar gelagert, die einen in die Gleitführungshülse axial hineinragenden Fortsatz (69) hat, der mit einem zur rotatorischformschlüssen Kopplung der Gleitführungshülse mit der Stellwelle vorgesehenen radialen Kupplungselement (71) versehen ist;
e) der innerhalb der zentralen Bohrung (51) **durch** die Stellhülse (46) berandete Innenraum und der radial erweiterte Gehäuseraum (133), innerhalb dessen der radial äußere Flansch (57) der Stellhülse angeordnet ist, stehen in kommunizierender Verbindung mit dem die Ventilfeder (41) und den Federteller (42) enthaltenden Gehäuseraum (137);
f) das Betätigungselement (118) des Mikroschalters (117) ist als schlanker Stab ausgebildet, der in eine sich zwischen dem ölfreien Aufnahmeraum des Mikroschalters (117) und dem den radialen Außenflansch (57) der Stellhülse (46) aufnehmenden Ringraum (133) erstreckenden Bohrung (128) des Gehäuseblocks (52), deren zentrale Achse (127) parallel zur zentralen Längsachse (54) des Gehäuses (52,48) verläuft, gleitend verschiebbar gegen diese Bohrung (128) abgedichtet angeordnet ist und **durch** formschlüssigen Eingriff eines Ankerkopfes (136) mit einer Ankemut (134) des Ringflansches (57) der Stellhülse (46) mit dieser zug- und schubfest bewegungsgekoppelt ist.

2. Überwachungsreinrichtung nach Anspruch 1, **dadurch gekennzeichnet, daß** die sich zwischen dem ölfreien Aufnahmeraum (122) für den Schalter (117) und dem den radialen Flansch (57) der Stellhülse (46) aufnehmenden Gehäuseraum (133) erstreckende, von dem Betätigungselement (118) durchsetzte Bohrung (128) des Gehäuseblocks (52) als Stufenbohrung mit einem in den ölfreien Aufnahmeraum (122) mündenden Führungsabschnitt (129), dessen Durchmesser zuzüglich eines Führungsspiels demjenigen des nadelförmigen Betätigungselements (118) entspricht, und mit einem gegenüber dem Führungsabschnitt (129) radial erweiterten, in den Ringraum (133) mündenden Dichtungsabschnitt ausgebildet ist, innerhalb dessen das Betätigungselement (118) gegen den Gehäuseblock (52) der Überwachungseinrichtung (10) abgedichtet ist.

3. Überwachungseinrichtung nach Anspruch 2, **dadurch gekennzeichnet, daß** zur Abdichtung des Betätigungselements (118) gegen den Gehäuseblock (22) innerhalb des Dichtungsabschnitts der Stufenbohrung (128) zwei Lippendichtungen (131 und 132) vorgesehen sind, die, in Richtung der zentralen Achse (127) der Bohrung gesehen, hintereinander angeordnet sind.

4. Überwachungseinrichtung nach Anspruch 3, **dadurch gekennzeichnet, daß** von der dem Durchmesser nach größeren Bohrungsstufe der Stufenbohrung (128) eine radiale Entlastungsbohrung ausgeht, deren bohrungsseitige Mündungsöffnung innerhalb des Dichtungsbereiches derjenigen Lippendichtung (132) angeordnet ist, die dem mit Öl verfüllten Aufnahmeraum (133) für den Ringflansch (57) der Stellhülse (46) benachbart angeordnet ist.

5. Überwachungseinrichtung nach einem der Ansprüche 1 bis 4, **dadurch gekennzeichnet, daß** die Stellwelle (68) gegen axiale Verschiebungen gegenüber dem Gehäuseblock (52) der Überwachungseinrichtung (10) gesichert ist, und daß das Dreh-Kupplungselement (71) als fahnen- oder schlüsselbart-förmiges Element ausgebildet ist, das radial in einen Längsschlitz (72) des Hülsenmantels (74) der Gleitführungshülse (66) hineinragt, dessen Längswangen beidseits des Drehkupplungs-Elements (71) gleitend an diesem abgestützt sind.

6. Überwachungseinrichtung nach Anspruch 5, **dadurch gekennzeichnet, daß** der Längsschlitz (72) des Hülsenmantels (74) mit einer äußeren, in den den Ringflansch (57) der Stellhülse (46) aufnehmenden Ringraum (133) mündenden Längsnut (139) der Gleitführungshülse (62) in kommunizierender Verbindung steht.

7. Überwachungseinrichtung nach einem der Ansprüche 1 bis 6, **dadurch gekennzeichnet, daß** der Betrag F_{S} einer Steuerfläche des Druckminderventils (38), durch deren Druckbeaufschlagung mit dem Ausgangsdruck des Druckminderventils (38) die zur eingestellten Vorspannung der Ventilfeder (41) entgegengesetzte Kraft resultiert, die im Regelungs-Gleichgewicht des Druckminderventils zur Abgabe des erwünschten Betriebsdrucks führt, um einen definierten Betrag F_{d} kleiner ist als der Betrag F_{R} der Ringflächen der Sensorkolben (106,107), auf denen diese den im Hydrozylinder (11) herrschenden Betriebsdrücken aussetzbar sind.

8. Überwachungseinrichtung nach einem der Ansprüche 1 bis 7, **dadurch gekennzeichnet, daß** die Gewindespindel (47) über ein zentrierendes Wälzlager (163) an dem Federteller (42) axial abgestützt ist, durch dessen axiale Verschiebung die Einstellung der Vorspannung der Ventilfeder (41) des Druckminderventils (38) erfolgt.

9. Überwachungseinrichtung nach Anspruch 8, **dadurch gekennzeichnet, daß** das Wälzlager (163) als Schrägkugellager ausgebildet ist, dessen Lagerkugeln zwischen einer konischen, federtellerseitigen, zur Gewindespindel (47) hin sich erweiternden Abwälzfläche (167) und einer kugelabschnittsförmigen Abwälzfläche am freien Ende (164) der Gewindespindel (47) eingespannt sind.

10. Überwachungseinrichtung nach einem der Ansprüche 1 bis 9, **dadurch gekennzeichnet, daß** zur Einstellung der Vorspannung der Ventilfeder (41) des Druckminderventils (38) ein elektromotorischer Stellantrieb vorgesehen ist.

11. Überwachungseinrichtung nach Anspruch 10, **dadurch gekennzeichnet, daß** als Stellmotor ein Schrittmotor vorgesehen ist, der durch Ansteuerung mit einer vorgebbaren Anzahl von Steuerimpulsen, mit denen jeweils ein inkrementaler Stellhub verknüpft ist, zur Ausführung des Vorspann-Stellhubes ansteuerbar ist.

12. Überwachungseinrichtung nach Anspruch 10 oder Anspruch 11, **dadurch gekennzeichnet, daß** ein Wegmeßsystem zur Überwachung des Vorspannungs-Stellhubes der Spindel (47) und/oder der Ventilfeder (41) vorgesehen ist.

13. Überwachungseinrichtung nach einem der Ansprüche 10 bis 12, **dadurch gekennzeichnet, daß** zur Einstellung der Vorspannung der Ventilfeder (41) ein Druck-Regelkreis vorgesehen ist, mit einem den Ausgangsdruck des Druckminderventils (38) erfassenden elektronischen oder elektromechanischen Drucksensor (156), dessen druckcharakteristisches Ausgangssignal einer elektronischen Steuereinheit (145) zugeleitet ist, die aus einem Vergleich des durch das IstwertSignal repräsentierten Druckes mit einem einstellbar vorgebbaren Sollwert die für die Angleichung des Istwertes an den Sollwert erforderlichen Ansteuersignale für die elektromotorische Stelleinrichtung erzeugt.

14. Überwachungseinrichtung nach einem der Ansprüche 1 bis 13, **dadurch gekennzeichnet, daß** eine elektronische Zeitmeßeinrichtung vorgesehen ist, die die Zeitspanne erfaßt, die ab dem Umschalten des Richtungs-Steuerventils (22) in die für den vorgesehenen Betriebsmodus des Hydrozylinders (11) erforderliche Funktionsstellung I bzw. II verstreicht, bis der durch die Einstellung der Federvorspannung des Druckminderventils (38) vorgegebene Betriebsdruck erreicht ist, über einen Vergleich der gemessenen Zeitspanne mit einem für ordnungsgemäße Funktion des überwachten hydraulischen Aggregats charakteristischen Erfahrungswert je ein Fehlfunktionsanzeigesignal für die Fälle generiert, daß die gemessene Zeitspanne signifikant kürzer oder signifikant länger ist als die Vergleichszeitspanne oder der Betriebsdruck nicht erreicht wird.

15. Überwachungseinrichtung nach Anspruch 14, **dadurch gekennzeichnet, daß** ein hydraulisches Stellglied, vorzugsweise ein zwischen das Druckminderventil (38) und den Hydrozylinder (11) geschaltetes Stromregelventil (162), vorgesehen ist, das für einen überwiegenden Teil der Zeitspanne, die zwischen dem Umschalten des Richtungs-Steuerventils (22) bis zum Erreichen des Betriebsdruckes verstreicht, den dem Hydrozylinder (11) zuströmenden Hydraulikölstrom innerhalb eines definierten Wertebereiches hält.

## Claims

1. Electrohydraulic monitoring device (10) for a dual acting hydraulic cylinder (11), which can be used in two alternative deflected configurations of its cylinder piston and its cylinder housing according to different functions by the alternative application and relief of pressure in two pressure spaces (19, 21) separated from each other by the cylinder piston, wherein for example for safety reasons it is necessary to maintain a defined operating pressure, for the presetting of which a pressure relief valve (38) is provided, by means of which, from a high starting pressure of a pressure supply aggregate, a defined pressure can be derived and coupled into the appropriate pressure space for the respective function of the hydraulic cylinder (11), which pressure is preset by adjusting the pretension of a valve spring (41) by means if a spindle drive, which is provided in a spring space (137) which is under the pressure of hydraulic oil flowing out of the hydraulic system, which at its end is bordered or surrounded axially moveably by a control jacket (46), which is axially slideable within a limited axial stroke range a between alternative end positions demarked by abutment with housing elements, which are associated with the alternative switch positions of a switch (117) provided in an oil free housing space (122), which is operable by an adjoining element (118) moveably coupled with the control jacket, wherein for determination of the respective operating pressures coupled to the hydraulic cylinder two axially moveable sensor chambers are provided bordered by two sensor pistons (106, 107), each one respectively in communication with a pressure space (19, 21) of the cylinder, by which alternative application and relief of pressure the control jacket respectively is urged into the same end position with which one of the two switch positions of the electrical switch (117) is associated, **characterized by** the following characteristics:
a) the sensor piston is in the form of a ring piston, which radially outwardly is sealed against the central through-going bore (51) of a housing block (52) of the monitoring device (10) and radially inwardly is sealed against the outer jacket surface (102) of a slide guide pipe (66), which is sealed with a radial end flange (78) at the end segment of the bore (51) opposite to the spring (41) and secured against axial sliding relative to the housing block (52);
b) the control jacket (46) is in the form of a cylindrical pot; with its base directed towards the spring (41) and its jacket guided axially slideable in the central bore (51), with its jacket segment (49') facing towards the adjacent sensor piston (106), against which in the bore associated ring surface (77) the sensor piston (106) is axially supportable; the length of its axial deflection stroke a possible between the end position is marked by the abutment effect of a radial ring flange (56) of the control jacket with an oppositely arranged ring shaped housing side end surface (58 and 59), whereby the jacket is secured against rotation,
c) the threaded spindle (47) extends as a projection from a base side of a cylindrical pot-shaped guide jacket (62) mounted axially slideable and rotatable within the jacket of the control casing (46), and is guided in a through-going threaded bore (44) of a base (56) which provides the function of a spindle nut for the control casing (46) employed as spindle drive and engages with its free end centrally with an axially moveable spring plate (42) used for compressing the valve spring (41);
d) a control shaft is rotatably mounted centrally in the slide guide pipe (66), which has a projection (69) extending axially into the slide guide casing, which is provided with a radial coupling element (71) for rotation form-fitting coupling of the slide guide casing with the control shaft;
e) the internal space bordered by the control jacket (46) within the central bore (51) and the radial extending housing space (133), within which the radial outer flange (57) of the control casing is provided, is in communicating connection with the valve spring (41) and the spring plate (42) containing housing space (137);
f) the actuating element (118) of the micro-switch (117) is in the form of a slender pin, which extends through a bore (128) of the housing block (52) extending between the oil free receiving space of the micro-switch (117) and the ring space (133) receiving the radial outer flange (57) of the control casing (56), of which the central axis (127) runs parallel to the central longitudinal axis (54) of the housing (52, 48), is guided gliding and sealed against this bore (128), and by form fitting engagement with an anchor head (136) is moveably coupled with the anchor nut (134) of the ring flange (57) of the control casing (46) is coupled fixed for pulling and pushing therewith.

2. Monitoring device according to Claim 1, thereby characterized, that the through-bore (128) of the housing block (52) extending between the oil free receiving space (122) for the switch (117) and the radial flange (57) of the control jacket (46) receiving housing space (133), through which through-bore (128) the actuating element (118) extends, is in the form of a step-bore with a guide segment (129) in communication with the oil free receiving space (122), of which the diameter is at the same time corresponding to that of the needle-shaped actuating element (118) plus tolerances, and which includes a radially wider sealing segment on the side of the guide segment (129) communicating in the ring space (133), within which the actuating element (118) is sealed against the housing block (52) of the monitoring device (10).

3. Monitoring device according to Claim 2, thereby characterized, that for sealing of the actuating element (118) against the housing block (22) within the sealing segment of the step bore (128), two lip seals (131 and 132) are provided, which, viewed in the direction of the central axis (127) of the bore, are arranged sequentially.

4. Monitoring device according to Claim 3, thereby characterized, that a radial relief bore extends from the larger diameter bore step of the step bore (128), of which the bore side opening is in communication with the sealing area of the respective lip seal (132), which is provided adjacent the oil filled receiving space (133) for the ring flange (57) of the control casing (46).

5. Monitoring device according to one of Claims 1 through 4, thereby characterized, that the control shaft (68) is secured against axial displacement relative to the housing block (52) of the monitoring device (10), and that the rotation-coupling element (71) is in the form of a vane or key shaped element, which extends radially into a longitudinal slit (72) of the casing jacket (74) of the slide guide casing (66), of which the side walls on both sides are supported guided against the rotation coupling element (71).

6. Monitoring device according to Claim 5, thereby characterized, that the longitudinal slit (72) of the casing jacket (74) is in communicating connection with a longitudinal groove (139) of the slide guide casing (62) which communicates with the outer ring space (133) receiving the ring flange (57) of the control casing (46).

7. Monitoring device according to one of Claims 1 through 6, thereby characterized, that the value Fₛ of one control surface of the pressure reduction valve (38), upon which the application of pressure with the output pressure of the pressure reduction valve (38) provides the force employed for the set pre-tensioning of the valve spring (41), which leads to the regulating equilibrium of the pressure reduction valve for provision of the desired operating pressure, is smaller by a defined amount F_{d} than the value F_{R} of the ring surfaces of the sensor piston (106, 107) which are to be exposed to the operating pressure existing in the hydraulic cylinder (11).

8. Monitoring device according to one of Claims 1 through 7, thereby characterized, that the threaded spindle (47) is supported axially, via a central roller bearing (163), against a spring plate (42), of which the axial displacement produces an adjustment of the pretension of the valve spring (41) of the pressure reduction valve (38).

9. Monitoring device according to Claim 8, thereby characterized, that the roller bearing (163) is a slant ball bearing, of which the ball bearings are tensioned between, on the spring-plate side, a conical roller support surface (167), widening towards the threaded spindle (47), and a hemispherical shaped roller bearing surface at the free end (164) of the threaded spindle (47).

10. Monitoring device according to one of Claims 1 through 9, thereby characterized, that an electric motor control means is provided for adjusting of the pretension of the valve spring (41) of the pressure reduction valve (38).

11. Monitoring device according to Claim 10, thereby characterized, that the electric motor is a step motor, which is controllable by driving with a predetermined number of control impulses, with which respectively one incremental adjusting step is associated, for carrying out the pretension control stroke.

12. Monitoring device according to Claim 10 or 11, thereby characterized, that a location measuring system (position sensor) is provided for monitoring the pretension-adjusting stroke of the spindle (47) and/or the valve spring (41).

13. Monitoring device according to one of Claims 10 through 12, thereby characterized, that for adjusting the pretension of the valve spring (41) a pressure regulation circuit is provided, which is supplied via an electronic or electrical pressure sensor (156) with the output pressure of an electronic control unit (145), which from a comparison of the and the actual pressure value and a pre-set intended value produces the necessary control signal for the electric motor adjustment device.

14. Monitoring device according to one of Claims 1 through 13, thereby characterized, that an electronic time measuring device is provided, which determines the span of time, which elapses beginning with the switching of the direction control valve (22) in the necessary functional position I or as the case may be II as necessary for the desired operating mode of the hydraulic cylinder (11), until the predetermined operating pressure is achieved by the adjustment of the pretension of the pressure reduction valve (38), and by the comparison of the measured time span with a expected value characteristic for a normal operation of the monitored hydraulic aggregate generates a malfunction sequence in the case that the measured time span is significantly smaller or significantly larger than the compared to time, or the operating pressure is not achieved.

15. Monitoring device according to Claim 14, thereby characterized, that a hydraulic control elenient, preferably a flow regulating valve (162) is provided between the pressure reduction valve (38) and the hydraulic cylinder (11), which for the major portion of the time span, which passes between the switching over of the direction control valve (22) until achievement of the operating pressure, maintains the hydraulic oil flow flowing to the hydraulic cylinder (11) within a predefined value range.

## Revendications

1. Dispositif de surveillance électrohydraulique (10) d'un cylindre hydraulique à double effet, qui est utilisable par une mise sous pression et une mise hors pression alternées de deux compartiments de pression délimités entre eux par le piston de cylindre dans deux fonctions différentes correspondant à des configurations de déviation alternées de son piston et du boîtier de cylindre, dans lesquelles, par exemple pour des raisons de sécurité, le maintien de pressions de service définies est nécessaire, pour la détermination desquelles est prévue une vanne de réduction de pression (38) à l'aide de laquelle peut être dérivée de la haute pression de sortie d'un dispositif d'alimentation en pression une pression définie pouvant être introduite dans le compartiment de pression attribué à la fonction respective du cylindre hydraulique (11), laquelle pression peut être prédéterminée par le réglage de la précontrainte d'un ressort de vanne (41) à l'aide d'un entraînement de broche, lequel ressort est disposé dans un compartiment de ressort (137) soumis à la pression de l'huile hydraulique s'écoulant du système hydraulique, lequel compartiment de ressort est délimité avec une mobilité axiale unilatérale par une douille de réglage (46) qui, à l'intérieur d'une zone de course axiale limitée a, est déplaçable entre des positions extrêmes alternées marquées par un effet de butée avec des éléments de boîtier, avec lesquelles positions extrêmes sont liées des positions de commutations alternées d'un interrupteur (117) disposé dans un compartiment de boîtier exempt d'huile (122), lequel interrupteur peut être actionné par un élément d'actionnement (118) dont le mouvement est couplé avec la douille de réglage, alors que, pour la saisie de la pression de service respectivement introduite dans le cylindre hydraulique, sont prévues deux chambres de capteurs qui sont limitées dans leur mobilité axiale par deux pistons de capteurs (106, 107) et qui sont en liaison de communication avec respectivement un des compartiments de pression (19, 21) du cylindre, par la mise sous pression et la mise hors pression alternées desquelles chambres de capteurs la douille de réglage est respectivement poussée dans la même position d'extrémité qui est reliée à l'une des deux positions de commutation de l'interrupteur électrique (117), **caractérisé par** les caractéristiques suivantes :
a) les pistons de capteurs sont configurés comme pistons annulaires qui sont rendus étanche dans le sens radial vers l'extérieur par rapport à une forure centrale (51) traversant de part en part d'un bloc de boîtier (52) du dispositif de surveillance (10) et dans le sens radial vers l'intérieur par rapport à la surface d'enveloppe extérieure (102) d'un tube de guidage coulissant (66) qui, à l'aide d'une bride radiale d'extrémité (78) est rendu étanche sur la section d'extrémité opposée au ressort (41) de la forure (51) par rapport à cette forure et qui est protégé contre tout déplacement axial par rapport au bloc de boîtier (52) ;
b) la douille de réglage (46) est configurée en forme de pot cylindrique ; son fond est disposé de manière à être dirigé vers le ressort (41) et la douille est, avec son tronçon d'enveloppe (49') dirigée vers le piston de capteur voisin (106), sur la surface frontale annulaire (77) disposée à l'intérieur de la forure duquel le piston de capteur (106) peut être appuyé dans le sans axial, guidée avec une possibilité de déplacement coulissant dans la forure centrale 51 ; sa course de déviation axiale a, qui est possible entre les positions extrêmes, est marquée par un effet de butée d'une bride annulaire radiale (56) de la douille de réglage avec des surfaces frontales (58 et 59) de forme annulaire se trouvant du côté du boîtier et disposées en opposition réciproque, la douille étant protégée contre toute rotation ;
c) la broche filetée (47) est configurée comme prolongement se trouvant du côté du fond d'une douille de guidage coulissante (62) conçue en forme de pot cylindrique et logée de manière tournante et coulissante dans le sens axial à l'intérieur de l'enveloppe de la douille de réglage (46), est guidée avec une possibilité de vissage dans une forure taraudée traversant de part en part (44) du fond (55) de la douille de réglage (46) conférant la fonction de l'écrou de broche de l'entraînement de broche et agit avec son extrémité libre en position centrale sur un plateau de ressort (42) mobile dans le sens axial pour assurer le serrage du ressort de vanne (41) ;
d) dans le tube de guidage coulissant (66) est logé de manière centrale et tournante un arbre de réglage, qui comprend un prolongement (69) pénétrant dans le sens axial dans la douille de guidage coulissante et qui est muni d'un élément de couplage radial (71) prévu pour un couplage en complémentarité de rotation et de forme de la douille de guidage coulissante avec l'arbre de réglage ;
e) le compartiment intérieur délimité à l'intérieur de la forure centrale (51) par la douille de réglage (46) et le compartiment de boîtier (133) étendu dans le sens radial, à l'intérieur duquel est disposée la bride extérieure dans le sens radial (57) de la douille de réglage, sont en liaison de communication avec le compartiment de boîtier (137) contenant le ressort de vanne (41) et le plateau de ressort (42) ;
f) l'élément d'actionnement (118) du microcommutateur (117) est conçu comme tige élancée, qui est disposée de manière déplaçable par coulissement et de manière étanche dans une forure (128) du bloc de boîtier (52), qui s'étend entre le compartiment récepteur exempt d'huile du microcommutateur (117) et le compartiment annulaire (133) recevant la bride extérieure dans le sens radial (57) de la douille de réglage (46) et dont l'axe central (127) s'étend parallèlement à l'axe longitudinal central (54) du boîtier (52, 48) et qui, par une prise en complémentarité de forme d'une tête de boulon d'ancrage (136) avec une rainure d'ancrage (134) de la bride annulaire (57) de la douille de réglage (46), fait l'objet d'un accouplement en déplacement en solidarité de poussée et de traction avec celle-ci.

2. Dispositif de surveillance selon la revendication 1, **caractérisé en ce que** la forure (128) du bloc de boîtier (52) traversée par l'élément d'actionnement (118) et s'étendant entre le compartiment exempt d'huile (122) recevant le commutateur (117) et le compartiment de boîtier (133) recevant la bride radiale (57) de la douille de réglage (46) est configurée comme forure étagée avec un tronçon de guidage (129) aboutissant dans le compartiment récepteur exempt d'huile (122) et dont le diamètre, y compris un jeu de guidage, correspond à celui de l'élément d'actionnement en forme d'aiguille (118), et avec un tronçon d'étanchéité étendu dans le sens radial par rapport au tronçon de guidage (129) et aboutissant dans le compartiment annulaire (133), à l'intérieur duquel l'élément d'actionnement (118) est rendu étanche par rapport au bloc de boîtier (52) du dispositif de surveillance (10).

3. Dispositif de surveillance selon la revendication 2, **caractérisé en ce que** deux joints à lèvres (131 et 132) qui, en regardant en direction de l'axe central (127) de la forure, sont placés l'un derrière l'autre, sont prévus pour assurer l'étanchéité de l'élément d'actionnement (118) par rapport au bloc de boîtier (22) à l'intérieur du tronçon d'étanchéité de la forure étagée (128).

4. Dispositif de surveillance selon la revendication 3, **caractérisé en ce que**, depuis l'étagement dont le diamètre est plus grand de la forure étagée (128) part une forure de décharge radiale, dont l'ouverture d'embouchure située du coté de la forure est disposée à l'intérieur de la zone d'étanchéité du joint à lèvre (132) qui est disposée au voisinage du compartiment récepteur (133) rempli d'huile pour la bride annulaire (57) de la douille de réglage (46).

5. Dispositif de surveillance selon l'une quelconque des revendications 1 à 4, **caractérisé en ce que** l'arbre de réglage (68) est protégé contre des déplacements axiaux par rapport au bloc de boîtier (52) du dispositif de surveillance (10) et **en ce que** l'élément d'accouplement tournant (71) est configuré comme élément en forme de fanion ou de panneton de clef, qui pénètre dans le sens radial dans une fente longitudinale (72) de l'enveloppe de douille (74) de la douille de guidage coulissante (66), dont les joues longitudinales sont, des deux côtés de l'élément d'accouplement tournant (71), appuyées de manière coulissante sur celui-ci.

6. Dispositif de surveillance selon la revendication 5, **caractérisé en ce que** la fente longitudinale (72) de l'enveloppe de douille (74) est en liaison de communication avec une rainure longitudinale extérieure (139) de la douille de guidage coulissante (62) aboutissant dans le compartiment annulaire (133) recevant la bride annulaire (57) de la douille de réglage (46).

7. Dispositif de surveillance selon l'une quelconque des revendications 1 à 6, **caractérisé en ce que** la valeur F_{S} d'une surface de commande de la vanne de réduction de pression (38), par la mise sous pression de laquelle avec la pression de sortie de la vanne de réduction de pression (38) est obtenue la force opposée à la précontrainte réglée du ressort de vanne (41), laquelle conduit dans l'équilibre de régulation de la vanne de réduction de pression à la délivrance de la pression de service souhaitée, est moins importante d'une valeur définie F_{d} que la valeur F_{R} des surfaces annulaires des pistons de capteurs (106, 107), sur lesquelles ceux-ci peuvent être exposés aux pressions de service régnant dans le cylindre hydraulique (11).

8. Dispositif de surveillance selon l'une quelconque des revendications 1 à 7, **caractérisé en ce que**, par l'intermédiaire d'un palier à roulement assurant un centrage (163), la broche filetée (47) fait l'objet d'un appui axial sur le plateau de ressort (42), par le déplacement axial duquel a lieu le réglage de la précontrainte du ressort de vanne (41) de la vanne de réduction de pression (38).

9. Dispositif de surveillance selon la revendication 8, **caractérisé en ce que** le palier à roulement (163) est configuré comme roulement à billes à contact oblique, dont les billes de logement sont enserrées entre une surface de roulement conique (167), située du côté du plateau de ressort et s'élargissant en direction de la broche filetée (47) et une surface de roulement en forme de section de bille à l'extrémité libre (164) de la broche filetée (47).

10. Dispositif de surveillance selon l'une quelconque des revendications 1 à 9, **caractérisé en ce qu'**un élément de réglage à moteur électrique est prévu pour le réglage de la précontrainte du ressort de vanne (41) de la vanne de réduction de pression (38).

11. Dispositif de surveillance selon la revendication 10, **caractérisé en ce que** comme moteur de réglage est prévu un moteur pas à pas qui, pour réaliser la course de réglage de la précontrainte, peut être activé par un nombre d'impulsions de commande pouvant être prédéterminé et avec lesquelles est liée respectivement une course de réglage incrémentale.

12. Dispositif de surveillance selon la revendication 10 ou la revendication 11, **caractérisé en ce qu'**un système de mesure de trajet est prévu pour la surveillance de la course de réglage de la précontrainte de la broche (47) et/ou du ressort de vanne (41).

13. Dispositif de surveillance selon l'une quelconque des revendications 10 à 12, **caractérisé en ce que** pour le réglage de la précontrainte du ressort de vanne (41) est prévu un circuit de réglage de la pression avec un capteur de pression électronique ou électromécanique (156), qui capte la pression de sortie de la vanne de réduction de pression (38) et dont le signal de sortie caractéristique pour la pression est amené à une unité de commande électronique (145) qui, à partir d'une comparaison de la pression représentée par le signal de valeur réelle avec une valeur de consigne pouvant être prédéterminée de manière réglable, génère les signaux de sortie pour le dispositif de réglage à moteur électrique qui sont nécessaires pour l'égalisation de la valeur réelle par rapport à la valeur de consigne.

14. Dispositif de surveillance selon l'une quelconque des revendications 1 à 13, **caractérisé en ce qu'**est prévu un dispositif électronique de mesure du temps qui saisit la période de temps qui s'écoule à partir de la commutation de la vanne de commande de la direction (22) dans la position de fonctionnement I ou II nécessaire pour le mode de fonctionnement du cylindre hydraulique (11) prévu jusqu'à ce que la pression de service prédéterminée par le réglage de la précontrainte du ressort de la vanne de réduction de pression (38) soit atteinte et qui, par une comparaison de la période de temps mesurée avec une valeur d'expérience caractéristique pour un fonctionnement correct du dispositif hydraulique surveillé, génère respectivement un signal d'indication de fonctions défectueuses pour les cas où la période de temps mesurée est plus courte de manière significative ou est plus longue de manière significative que la période de temps de comparaison ou pour les cas où la pression de service n'est pas atteinte.

15. Dispositif de surveillance selon la revendication 14, **caractérisé en ce qu'**il est prévu un élément de réglage hydraulique, de préférence une vanne de régulation du flux (162) placée entre la vanne de réduction de pression (38) et le cylindre hydraulique (11) qui, pour une partie prépondérante de la période de temps qui s'écoule entre la commutation de la vanne de commande de la direction (22) et le moment où la pression de service est atteinte, maintient le flux d'huile hydraulique s'écoulant vers le cylindre hydraulique (11) à l'intérieur d'une plage de valeur définie.
